(19) **Europäisches Patentamt**

**European Patent Office**

**Office européen des brevets**

(11) **EP 1 059 840 B1**

(12) **EUROPEAN PATENT SPECIFICATION**

(45) Date of publication and mention
of the grant of the patent:
**01.10.2003 Bulletin 2003/40**

(51) Int Cl.⁷: **A01K 1/00**, A01K 1/02,
A01K 29/00, A22B 7/00

(21) Application number: **99907327.3**

(22) Date of filing: **02.03.1999**

(86) International application number:
**PCT/DK99/00098**

(87) International publication number:
**WO 99/044414 (10.09.1999 Gazette 1999/36)**

(54) **ANIMAL BREEDING SYSTEM**

TIERZUCHTANLAGE

SYSTEME D'ELEVAGE D'ANIMAUX

(84) Designated Contracting States:
**AT BE CH CY DE DK ES FI FR GB GR IE IT LI LU
MC NL PT SE**
Designated Extension States:
**AL LT LV MK RO SI**

(30) Priority: **03.03.1998 DK 28798
23.12.1998 DK 173098**

(43) Date of publication of application:
**20.12.2000 Bulletin 2000/51**

(73) Proprietor: **Kristoffer Larsen Innovation A/S
8721 Daugard (DK)**

(72) Inventor: **LARSEN, Jesper, Kristoffer
DK-8721 Daugard (DK)**

(74) Representative: **Plougmann & Vingtoft A/S
Sundkrogsgade 9,
P.O. Box 831
2100 Copenhagen O (DK)**

(56) References cited:
WO-A-90/07872          WO-A-91/03930
WO-A-96/19916          AT-B- 379 639
GB-A- 741 106          GB-A- 2 242 341

**Description**

The present invention relates to a breeding system for animals, in particular pigs, kept in a free-range herd for use in an open air or outdoor environment. The system comprises means for automatic and electronic registration of data for the individual animals, means for controlled and individually regularly feeding of the animals based on the recorded data of each animal, an open-air field area wherein the above means are arranged, means for recording the registered data of each animal in a registration unit, and optionally at least one device for containing water, a so-called "mud-hole" optionally connected to a waste treatment plant.

In a further embodiment, the invention relates to an arrangement for use in an open air breeding system for individual feeding of animals of a herd comprising a plurality of enclosures of a size suitable for comprising one of the animals, each enclosure having an inlet and an outlet and means for selectively switching the inlet and outlet between a for the animals passable state and a non-passable state, each enclosure also having a feeding bowl for containing feed, container means for containing a supply of feed, means for leading the feed from the container means to each of said bowls, a common inlet through which the animals may enter into each of the enclosures and means for selectively allowing animals to pass the common inlet, means for directing animals from the common inlet to a specified enclosure selected among the plurality of enclosures, and control means for controlling the operation of the arrangement.

In a still further embodiment, the invention relates to a method for feeding porkers of a herd, each porker being uniquely identifiable by means of identification means, comprising the steps of identifying one of the porkers and transmitting the identification to a control unit, allowing the porker into a feeding enclosure in which it is the sole porker, feeding the porker in the feeding enclosure, and allowing the porker to leave the feeding enclosure, wherein each step is controlled by means of the control unit.

Breeding pigs in an open air environment, so-called free-range breeding, is connected with a number of problems and disadvantages such as problems with pollution of the environment from urine and faeces from the animals leaking to the ground. Accordingly, the environment may be loaded with nitrate as well as phosphate to an undesired degree resulting in restrictions to the farmer with respect to the number of animals per field area which may be allowable. Furthermore, the free environment makes it difficult to monitor the individual animal with respect to feed consumption, weight, health condition, heat control, time for insemination etc. The missing control of the individual animal may result in slaughtering of animals not having the optimal weight and age, waste of expensive feed, lack of quality control of the slaughtered animals, lack of practicability of phase-feeding of porkers and other disadvantages which will be evident from the further description of the invention. The free environment also makes it very difficult to isolate a specific animal from the other animals when desired which result in unnecessary stressing of the animal when the farmer makes attempts to catch the animal.

Porkers, herein meaning pigs that are bred for meat production, i.e. animals, that are being bred for slaughtering, are today in modern meat production fed as a bulk and individual feeding of the animals may only be provided manually. The animals are typically kept in groups of 15-20 animals. However, if the animals are kept in larger herds, more than 25-50 animals but often even much more, stronger or more aggressive animals will tend to keep other animals away from the common feeding bowls, resulting in a large deviation in size and weight of pigs of similar ages. This has the effect that a herd of porkers of similar age may reach the desired final weight over a period of several week, thus letting the production means for raising the porkers be more or less idle over most of the period. Furthermore, the feed is utilised less effectively by the porkers that are not fed properly, resulting in higher consumption of feed per kilogram meat produced. Finally, the health of the badly fed porkers may suffer from the conditions. Consequently, individually controlled feeding of the animals is advantageous as compared to known methods of feeding and may be profitable if realised in an automated manner.

Known arrangements for individual feeding of animals are expensive to purchase for a larger herd of animals, in particular arrangements wherein each animal is identified, since each unit may only feed one animal at a time. Such arrangements take up plenty of square-metres of area relatively to the number of animals in the herd because each arrangement has a separate inlet and outlet for the animals.

Known huts for free-range breeding of pigs are generally built from light weight materials, such as sheet metal, aluminium, wood or plastic materials, and they are normally relatively small, about 6-10 m$^2$ and about 0,75-1,25 m in height. This is chosen in order to provide huts that may be easily moved by personnel without demanding advanced moving equipment. It is very much desired to provide movable huts. However, the light weight materials are not very resistant to wear and tear, and therefore the mean life time of the huts is reduced to about 3-4 years. In particular during movement of the huts, the load on the huts is very great, especially if a layer of hay and dirt is present in the hut, which is normally the case. Furthermore, the small size and weight of the huts may cause them to tip over and maybe even roll across the ground when strong winds are present, e.g. in the winter time. Thereby the animals are exposed to the weather, and the piglets may even freeze to death.

Furthermore, the size of the huts allows for only a limited production of pigs per hut. The capacity of a breeding ground may thus be increased if larger huts are used.

Finally, the small size of the huts, in particular the height, creates a bad working environment for the personnel. They are not able to stand up inside the hut, and since most huts have only one exit, a sow may block the exit when a person is inside the hut, and the sow may at the same time bite the person or squeeze him or her, thereby causing fractures or other injuries.

The insulation of the known huts is limited, typically with a heat transfer coefficient of approximately 0,69 W/ ($m^2$.K). In cold weather the air circulation of the hut is therefore reduced to a minimum in order to prevent the cold air from the outside from entering the hut. Furthermore, the pigs will "lump together" in order to keep warm. Thus, the air inside the hut tends to get humid, which may cause respiratory infections to the animals, and the larger and stronger animals may keep the smaller and less strong animals away from the best positions, or they may even lie on top of them, whereby the smaller animals may suffocate.

The above-mentioned problems are of special importance for out-door breeding of porkers, which presents the added problem of the exposure of the animals to the temperature and wind speed variations of the open air environment, calling for adjustment of the amount of feed.

WO 96/199912 relates to an arrangement for managing a herd of freely walking animals being cows or other animals for milking. The system comprises a milking station located in a receiving area and a milking stationfollowed by a separation area in case the cow should be excluded due to illness. As separation due to illness may be followed by a treatment which again may be a bad experience for the cow, she may not enter the milking station afterwards as frequently as desired. The problem disclosed in the document is to permit treatment of an animal without negatively influencing a desired behaviour of the animal. The problem is solved by an arrangement where the cow leaving the milking station is led back to the receiving area where there are feeding means and where the cow is free to enter the separation device. The document mentions use of identification means, feeding means, control means for controlling the state of the gates to be used with the milking station and the connected receiving area and separation area. However, the system does not relate to means for controlled and individually daily feeding of the animals based on the recorded data of each animal.

US Patent No.5,673,647 relates to an automated method and system for providing individual animal electronic identification, measurement and value based management of cattle i a large cattle feedlot. Animals are individually identified and measured by weight, external dimensions and characteristics of internal body tissue. The individual identification and registration of the cattle with respect to physical and other information is used for calculating the optimal time for slaughtering. There is no mentioning of an individual feeding of the cattle or feeding means and the cattle are fed directly on the ground in the herd.

DE 3701864 A1 relates to indoor handling of pigs, particular sows. The document mentions registration of data on the sows including the weight which are used to determine the desired amount of food probably by use of standard feeding keys for sows. In fact the invention relates to a specific feeding/separation system where the sow after separation is transported (on a wagon) to a feeding box. It is mentioned that the system may also be use for porkers. There in no teaching of an outdoor breeding system.

GB 2 232 053 relates to a system for feeding free-range sows provided with a transponder each. The system comprises an antenna which registers passing sows and communicates with a computer which selects whether the sow should be fed. In such case the sow is allowed entrance to a receiving area in front of the feeding machines. There is no mentioning of individual feeding of the sow which receive a standard portion of food.

WO 91/03930 relates to a system for electronic identification of an animal which also register the amount of food the animal eats from a free amount of food.

Description of the invention

It is an object of the present invention to provide a breeding system for breeding animals, in particular pigs, in open-air, free range conditions, in a highly automated way to ensure low requirement of manual labour and at the same time to ensure a throughout surveillance of the animals, so that the animal breeding is economically sound, environmentally and ecologically advantageous and provides potential for the best animal welfare.

Even though the following description relates to a breeding system for pigs it is within the scope of the present invention to use a system adapted for sheep. The skilled person would, based on the present invention and description thereof, be able to perform the relevant modifications with respect to the dimensions of shelters and other means described in detail below so that the system would be operable for sheeps.

The present invention relates to a breeding system for use in an open air environment for a number of animals, preferable for pigs, and comprises

By regularly is normally and preferably understood about once a day, ranging from three feedings per week to two-three feedings per day. The interval between the feedings may be a more or less constant interval of time such as 36 hours or may be of regular pattern of e.g. 24/12/24 hours. The interval may also be adapted to the outdoor temperature, as a more frequent feeding may be needed in cold weather. By use of a control system as disclosed in connection with the present invention, such individual regularly feeding of each individual animal is made possible in that a specific interval of feeding may be programmed for each animal.

Where preferred, the open-air field is enclosed by a fence. The fence may be adapted to the specific animals. However, as the animal will receive regular feeding, it is very likely that the animal will return to the feeding area voluntary. In other situations, the field area may be such that the field area has natural borders such as rivers or the like. Accordingly, the field area may include parts of forest or other suitable habitats for breeding the animals.

In a preferred embodiment, the breeding system further comprises means for automatically identifying each of the individual animals, this identification allows different handling of each animal. Any specific handling or control of each individual animal is also relevant in connection to the possibility of isolate the identified animal, Accordingly, in a still further embodiment the breeding system according to the present invention may further comprise means for automatically separating and/or isolating an identified animal from one or more of the other animals. Apparently, the

a) means for automatic and electronic registration of data for the individual animals,

b) means for recording the registered data of each animal in a registration unit,

c) means for controlled and individually regularly feeding of the animals based on the recorded data of each animal, and

d) an open-air field area wherein the means a) and c) are arranged. means for identifying the animal may be integrated with the means for automatic and electronic registration of data for the individual animals.

In another embodiment, the means for separation and/or isolation is integrated with the means for controlled and individually regularly feeding of the animals based on the recorded data of each animal.

In a further aspect the breeding system comprise means for providing shelter for the animal such as a hut.

The means for providing shelter or the hut is preferably a construction which is simple and movable so that it is easy to shift between field areas. As described in detailed in connection with the figures, the present invention preferably utilises a basic shelter construction which is modified according to the specific use.

The shelter or hut may be in the form of a standard hut for providing shelter for sows without pigs or for porkers which both are able to live together in a shelter without any special arrangements of the shelter. Accordingly, in one embodiment, the dimensions of a standard shelter as the one described in connection with the figures is modified to conform with the desired number of animals for which the hut provides shelter.

If the shelter is for farrowing sows, the shelter or hut is equipped with one or more, preferably two, sow retainers allowing handling of the farrowing sow if desired. The shelter for farrowing sows also comprise an area wherein the piglets are protected from the sow. Accordingly, the shelter is preferably separated in such a way that the piglets may find a safe space but still be within the sight of the sow. The separation may be due to a low roof in one side of the shelter. The piglets will automatically search the safe area if a heating lamp is placed in the shelter area for the piglets. The safe area prevents the killing of the piglets if the sow is laying down on the piglets.

The means for providing shelter for the animals may also include a family hut for pigs adapted for housing at least one sow with piglets of the age up to about 6-7 weeks, the hut being divided into at least two parts, one part allowing the piglets to be separated from another part housing the sow or sows. The separation may for this instance be by means of e.g. a separating sheet with an opening having such dimensions that the sows, but not the piglets, are prevented from passing through the opening.

In a further embodiment, the means for providing shelter for the animals further comprises a feeding hut for pigs adapted for feeding the pigs by a transponder-feeder. In this case, the hut comprises an inlet door and an outlet door and optionally a gate between the inlet and outlet doors preventing the animal from leaving the hut through the inlet door. Generally, the feeding hut is isolated from the huts providing shelter for the animal during the night and in cold weather such as the farrowing hut and family hut described above.

The shelters are substantially provided with isolated shelter walls, are preferable movable in one piece. In addition the shelters are generally without any floor which also enables easy handling and moving of the shelters. The shelters may be placed directly on the ground. Furthermore, the shelters are optionally provided with ventilation means such as windows.

A very important aspect of the invention is the means for automatically identifying an individual animal. This means relates in its general form to a mark or a label connected to the animal, the means may also include more sophisticated systems such as a barcode or iris-identification means. The means for identification comprises or is capable of obtaining information relating to the pig and which is automatically registered by a registration unit located e.g. in connection with a feeding hut or in connection with the means for automatically separating and/or isolating an identified animal from one or more of the other animals.

Preferably, the individual animal comprises a label or a mark fastened on the animal, such as on the ear. The animal may have more than mark, e.g an mark en each of the ears in that the mark may follow the slaughtered animal to the consumer. In case it is desired to trace the animal, the mark or a minor part of the mark still be present with the final product may be used for that purpose.

The registration unit is in one embodiment activated by the presence of the animal bearing the mark when the animal is located in or is entering a feeding hut such as the one described above.

The purpose of identifying the individual animal is for example for providing the individual animal with a controlled and specific amount and/or mixture of feed based on the identification of the animal. It is within the definition of a controlled feeding according to the present invention to provide an individual animal with feed ad libitum when desired. In particular, the system may comprise means for determining the weight of an identified animal, and the specific amount and/or mixture of feed may be determined in response to the weight of the animal. This is especially advantageous for individual feeding of porkers, so that an individual animal being below an average weight for its age may be fed an extra supply.

The system according to the present invention is also capable of identifying animals which for some reasons do not get the expected predetermined amount of feed within a predetermined period of time, as the identifying system may register whether all animals recognised by the system have visited the feeding hut.

In general, the monitoring, registration and control of the animals are preferably performed with standard equipment, such as ear transponders, stationary and hand held transceivers for communicating with the transponders, means for temperature registration, means for marking the animals, means for measuring the thickness of the fat layer on the back of the porkers, weights etc. This equipment is commonly commercially available and may by purchased from a number of producers, such as Schauer (Switzerland), Laprova (Denmark) or SKIOLD datamix a/s (Denmark) and other manufacures.

In a further embodiment of the breeding system according the invention, the means for automatically separating and/or isolating an identified animal from one or more of the other animals is a separation hut comprising an inlet door for an animal entering the hut and means for directing the animal towards one of at least two outlet doors. The number of outlet doors is easily adapted to the number of groups of animals which should be isolated or separated. The separation may be desired based on health,heat of the animal, weight, body temperature, fat content, feed consumption, etc. which is registered in connection with the identified animal. The registration method may also include videotaping or photography which may be handled digitally in the system. The separation is easily performed by a turnable fence which is driven automatically and based on the information received about the individual animal by the separation system and which directs the animal towards the desired outlet door.

As the pigs in warm weather above 10°C-12°C need to cool down, a breeding system according to the present invention may also include a mud-hole. In addition, the pigs prefer to deliver urine and faeces to a wet area and this is utilised by an arrangement of a mud-hole on the field so that the animals leaving the shelter (in the morning) will enter the mud-hole on their way to the means for controlled feeding. Thereby the urine and faeces from the pigs are substantially isolated in the mud-hole. In a preferred embodiment the mud-hole is movable.

In one embodiment the mud-hole has such dimensions so that it may contain at least one of said animals and having a design so that said animals are able to enter and leave the mud-hole, the mud-hole being substantially isolated in its lower part from the field with a barrier so as to substantially prevent substances including the urine and faeces contained in the mud-hole from leaking to the environment.

The mud-hole may in a further embodiment be provided with draining means for discharging parts of the contents of the mud-hole, the system further comprising connecting means, such as a pipe or a tube, connected to the draining means for leading the discharged part from the mud-hole. In a preferred embodiment, the mud-hole is connected to a waste-water treatment system, such as a natural reedbed, wherein the waste-water treatment system is connected to the mud-hole through the draining means for receiving the discharged part from the mud-hole. A most suitable waste-water treatment system for water containing urine and faeces is manufactured and sold by Bioscan A/S, Denmark.

The invention further relates to a mud-hole for use in a breeding system as described herein and having such dimensions so that it may contain at least one of said animals and having a design so that said animals are able to enter and leave the mud-hole, the mud-hole being substantially isolated at a lower part from the natural environment with a barrier so as to substantially prevent substances contained in the mud-hole from leaking to the environment.

A conventional reedbed system known in the art consist of waste water flowing over or through the substrate, such as sand, gravel or soil, in which the reeds are growing. A conventional reedbed system may be of the type of a horizontal flow system, in which-waste water flows across the reedbed comprising suitable plants. Waste water is then fed in an inlet in one end of the system and flows slowly across the bed in a horizontal path until it reaches the outlet at the opposite end of the flow system.

In order to minimise the pollution of the environment, the facilities for slaughtering the animals comprise means for collecting the waste from the slaughterhouse.

The breeding system may be adapted to comprise between 25 and 100.000 animals but each unit within which the animals constitutes a single herd preferably comprises between 25 and 1000 animals which is suitable for limiting the spreading of diseases. As will also be clear from the following description, the system according to the present invention involves a selection of the embodiments described such as a selection of the described huts for providing shelter for the relevant group of animals living together in a single field area only separated with suitable fences.

Thus, in one embodiment the present invention regards an arrangement for individual feeding of animals of a herd comprising

a plurality of enclosures of a size suitable for comprising one of the animals, each enclosure having an inlet and an outlet and means for selectively switching the inlet and outlet between a for the animals passable state and a non-passable state, each enclosure also having a feeding bowl for containing feed,
container means for containing a supply of feed,
means for leading the feed from the container means to each of said bowls,
a common inlet through which the animals may enter into each of the enclosures and means for selectively allowing animals to pass the common inlet,
means for directing animals from the common inlet to a specified enclosure selected among the plurality of enclosures, and
control means for controlling the operation of the arrangement.

Advantageously, the arrangement comprises means for performing a unique identification of each animal of the herd, the means being arranged so as to allow for identification of an animal before letting it into the arrangement. The identification is performed automatically and the identification means on each animal may be the eyes or other natural but unique characteristic of the animal or it may be a mark bearing a code, such as a visual code like a bar code, a letter code or other visual signs. However, in a preferred embodiment, the arrangement comprises

a plurality of transponders each having a unique identification code, each animal of the herd being equipped with a transponder for individual identification, and
a transceiver for reading the identification codes of the transponders, the transceiver being arranged near the common inlet so as to allow for identification of an animal before letting it into the arrangement.

The arrangement may further comprise an inlet enclosure of a size suitable for comprising one of the animals, the common inlet forming the inlet of the inlet enclosure, the inlet enclosure having means for selectively allowing an animal within the enclosure to leave the inlet enclosure and having means for determining at least one of the following characteristics of each identified animal passing the common inlet and for transmitting the at least one characteristic to the control means:

a) the weight of the animal,
b) the skin temperature of the animal measured from the infra red radiation from the animal,
c) the body temperature of the animal measured by means of a sensor mounted on the animal, and
d) the thickness of the fat layer on the back of the animal, optionally measured by use of an ultra sound sensor.

The arrangement may also be equipped with electronic cameras for video or still pictures for supporting remote surveillance and control of the arrangement.

Furthermore, the arrangement may further comprise means for selectively separating identified animals having passed the common inlet to at least one separation enclosure. The reason for separation may be that the animal is to be slaughtered, is ill or, if the herd comprises sows, is in heat and should be inseminated, is about to farrow etc.

The plurality of enclosures of the arrangement may, in order to save area and for efficient use of the equipment, be arranged on a platform, the arrangement having means for rotating the platform, preferably at a constant angular speed, wherein switching between the passable state and the non-passable state is being provided by the rotational movement of the platform. For such an arrangement, the opening defining the inlet of each enclosure is also advantageously defined by the outlet of said enclosure.

In a simple version, each animal is allowed to eat the amount it desires when being alone in the feeding enclosure. However, in a preferred embodiment of the invention, the control means controlling the operation of the arrangement may control the amount of and optionally the type of feed supplied to the individually identified animal. The type of feed may be a mixture of different types of feed supplied from a number of feed containers. Preferably, the amount of feed is adjusted so that the porkers need to find about 10% of the daily feed intake out in the field to assure that each animal is properly exercised which increases the quality of the meat.

For outdoor breeding of pigs, the supply of feed to the individual animal should be adjusted according to the environmental condition. Thus, the arrangement may comprise means for adjusting the amount of feed supplied to the individual animal according to the temperature and optionally the wind speed the animals are subjected to.

The arrangement may be used for several types of animals, such as sheep or pigs, but the arrangement according to the invention is in particular suitable for individual feeding of pigs, especially porkers.

Furthermore, the invention regards a method of feeding porkers of a herd, each porker being uniquely identifiable by means of identification means, comprising the steps of

identifying one of the porkers and transmitting the identification to a control unit,
allowing the porker into a feeding enclosure in which it is the sole porker,
determining an individual amount of feed for each porker by means of the control unit, and
feeding each porker the determined individual amount of feed when the porker is present within the feeding enclosure,
allowing the porker to leave the feeding enclosure,

wherein each step is controlled by means of the control unit.

Preferably, each porker is equipped with a transponder having a unique identification code and the identification step comprises the step of reading the identification code of the transponder of one of the porkers with a transceiver.

At least one of the following characteristics of each identified porker may in a preferred embodiment of the invention be determined and stored in storage means of the control unit:

a) the weight of the porker,
b) the skin temperature of the porker measured from the infra red radiation from the animal,
c) the body temperature of the porker measured by means of a sensor mounted on the porker, and
d) the thickness of the fat layer on the back of the porker.

If at least the weight of the porker is determined, the amount of feed fed to the individual porker may be determined from the weight of said porker. The amount of feed fed to each porker may additionally or alternatively be adjusted for the air temperature and optionally for the wind speed the porkers are subjected to. The general condition of the individual animal may also be used as a parameter for adjusting the amount of feed.

The method may further comprise the steps of

determining whether an identified porker should be separated from the herd by means of the control unit, and
activating separation means by means of the control unit so as to separate said porker into a separation enclosure.
If at least a temperature of the identified porker is determined, the separation of the identified porker may be effected in response to the determined temperature of said porker.

The control unit may according to the invention at least temporarily be connected via a data communication network to a remote surveillance system whereby the operation of the control unit may be remotely monitored and at least partially controlled. The data communication network may include local network, private and public network, wide area network and also include communication by satellite and mobile telephone or any combination of the above mentioned network or means for communication.

Information in the control unit may be provided to external parties, such as farming consultants, vets, slaughterhouses, banks etc. The system is preferably protected against abuse by applying individual passwords for every party who may gain access to the system.

In case a slaughterhouse subscribes to the service it may use the information obtained as a basis for production planning. They may, e.g., order and/or collect selected pigs.

The selection may, e.g., be based on the weight of and/or the thickness of the fat layer on the back of the individual pig, on the temperature registrations of the animals, i.e. have they been ill, and/or whether they have been given medicine.

The described arrangement and method of the invention for individual feeding of animals may be used independently, but are preferably used with the arrangements for breeding animals such as sheep or especially pigs as described herein.

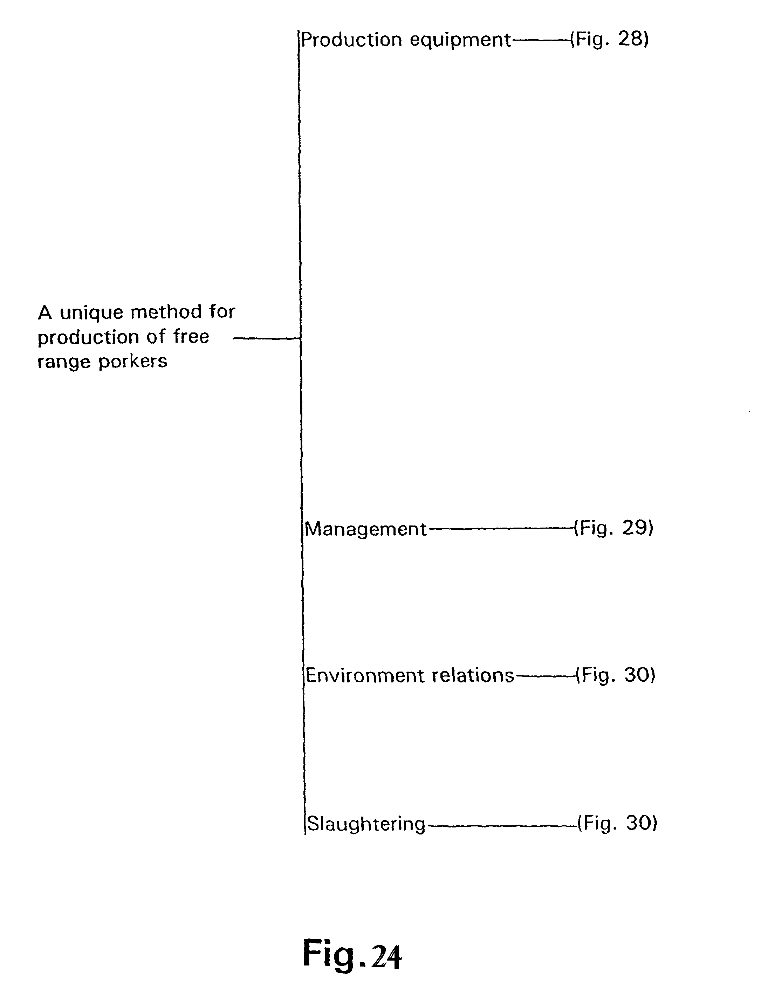

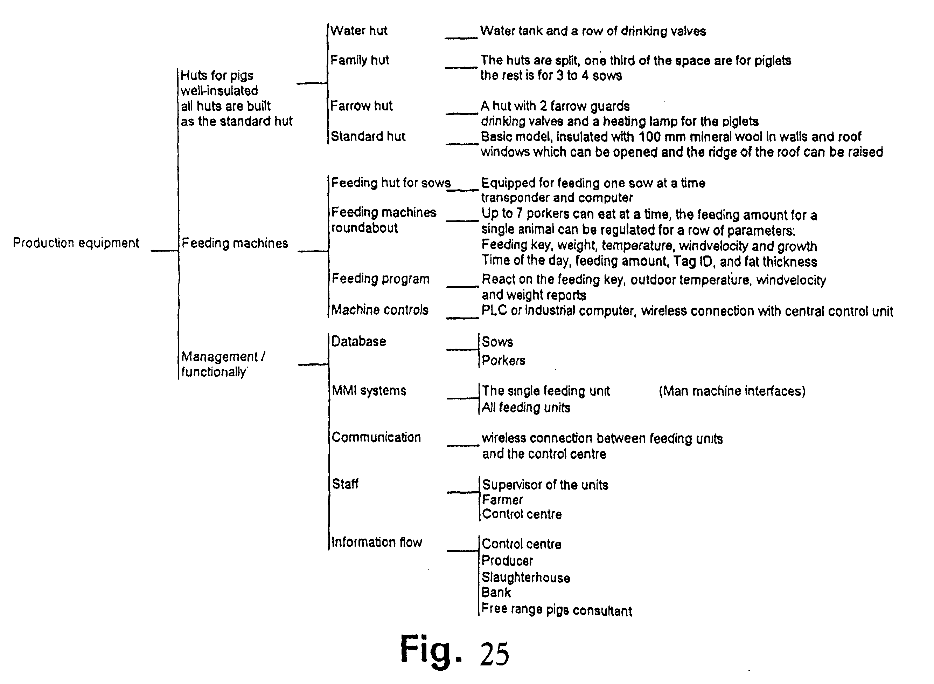

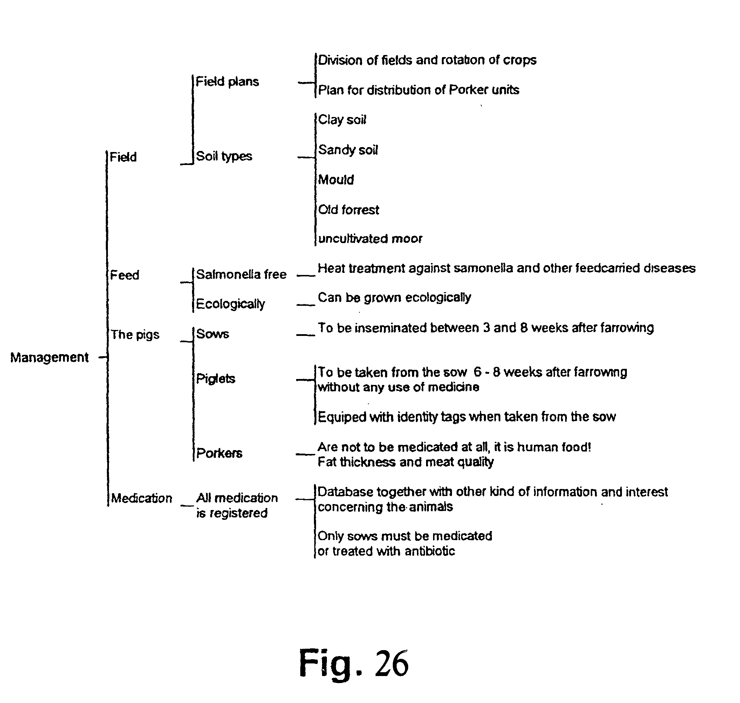

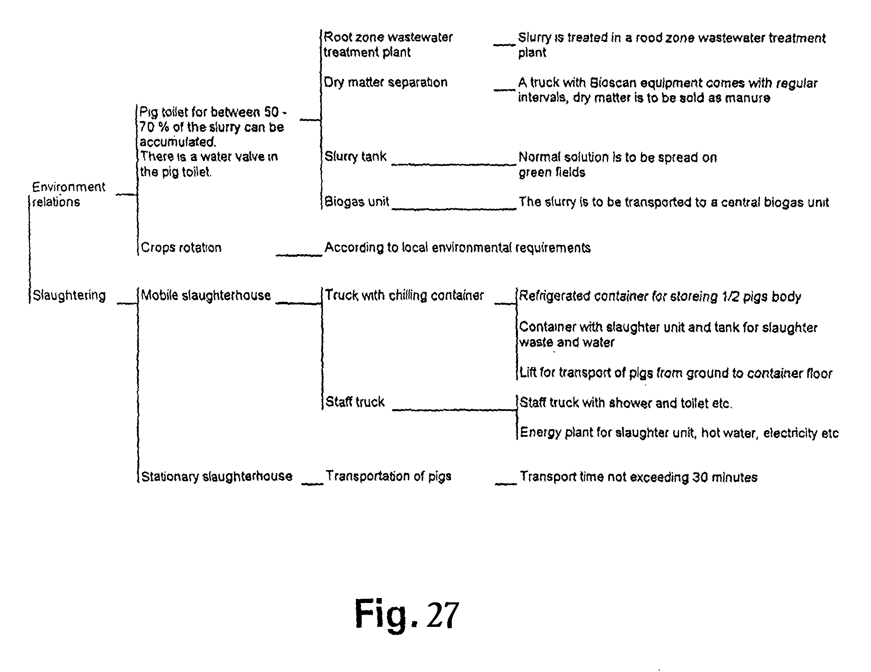

It is an important aspect of the present invention that the control system is permanently or temporarily connected over a communication network with a surveillance system from which the function of the system may be surveyed and at least partially controlled. Accordingly, any step of breeding the animal may be surveyed and/or controlled by any person or institution which have been allowed entrance to the system. The institution may include control institutions such as the organisations for animal welfare or governmental institutions. However, the system is especially adapted for persons directly involved in the breding such as the farmer(s), one or more controller(s), a veterinarian, one or more investor(s), a slaughterhouse, a food supplier or any other person which may have interest in knowing the status of the system. Possible interactions of persons related to a breeding system according to the present invention appears from the diagram disclosed in Figs. 24-27.

Brief description of figures

Fig. 1 shows a standard hut seen from the side,

Fig. 2 shows a standard hut seen from one end,

Fig.3 shows a cross-section of the standard hut,

Fig. 4 is a sketch of the ventilating air flow of the standard hut,

Fig. 5 shows the interior of a farrowing hut,

Fig. 6 shows the interior of a family hut,

Fig. 7 shows the interior of a shelter hut,

Fig. 8 shows the interior of a transponder-feeding hut,

Fig. 9 shows the interior of a separation hut,

Fig. 10 shows a watering hut,

Fig. 11 shows a feeding hut,

Fig. 12 a) and b) shows a mobile mud-hole,

Fig. 13 shows the arrangements on a field of type A,

Fig. 14 shows the arrangements on a field of type B,

Fig. 15 shows the arrangements on a field of type C,

Fig. 16 shows the arrangements on a field of type D,

Fig. 17 shows the arrangements on a field of type E,

Fig. 18 is a flow-chart showing modifications in standard software for implementing heat control,

Fig. 19 is a flow-chart showing modifications in standard software for implementing fertilising control in case of late weaning of piglets,

Fig. 20 is a flow-chart showing modifications in standard software for implementing phase-fed porkers in automatic systems,

Fig. 21 shows an elevated view of an arrangement comprising separation equipment and a feeding carrousel,

Fig. 22 shows the arrangement of Fig. 21 placed within a feeding hut, and

Fig. 23 shows a cross-section of the arrangement of Fig, 22.

Figs. 24-27 shows a diagram disclosing the interconnection of different parts of a free range production of porkers.

Detailed description of figures

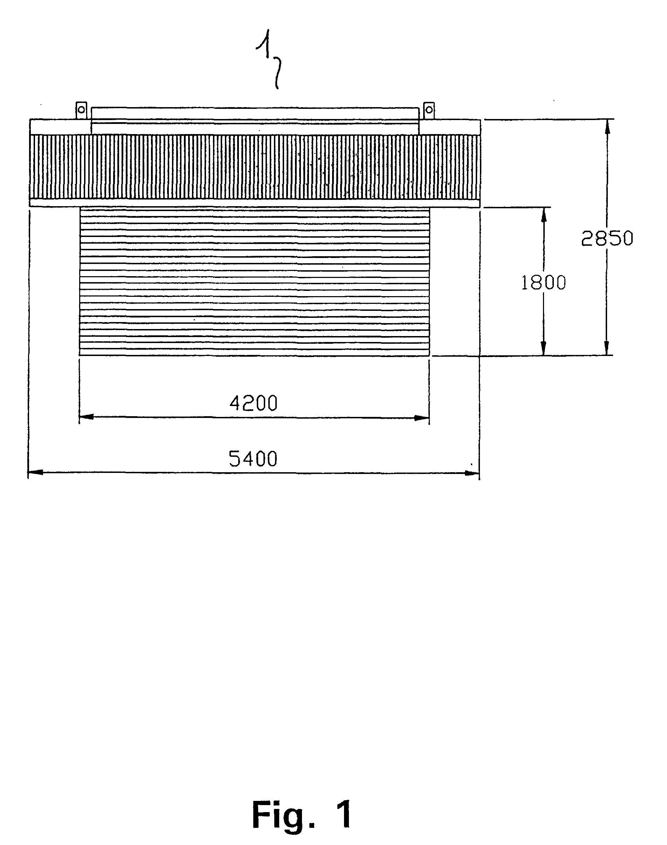

The figures 1-23 illustrates a number of embodiments and details of a breeding system according to the invention.

Buildings for a free-range breeding system

A number of buildings and other constructions that may be used for a breeding system according to the invention are shown in Figs 1-12. These buildings and constructions are suitable for the breeding system but similar arrangements may also be applied. The buildings to be placed on the fields are preferably mobile which means that they may be moved from one field to another without excessive dismounting from the field. The reason for this demand is that crop should be grown on the fields every second year according the present official regulations, at least in Denmark, for environmental reasons.

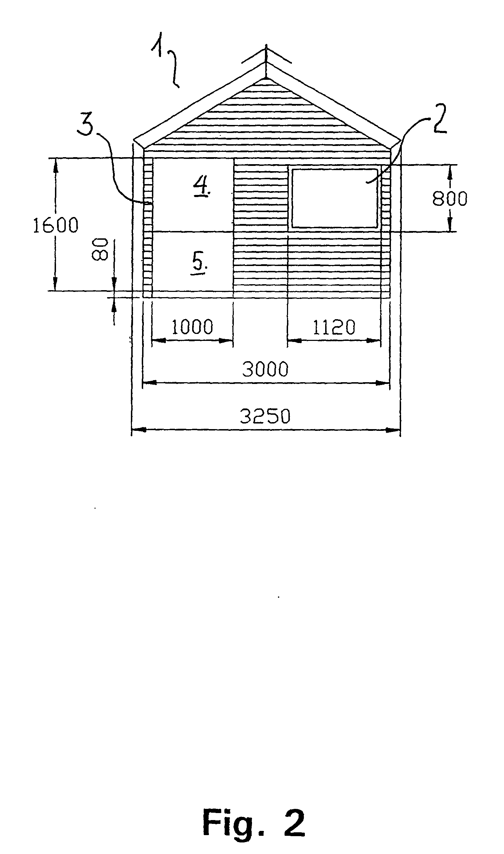

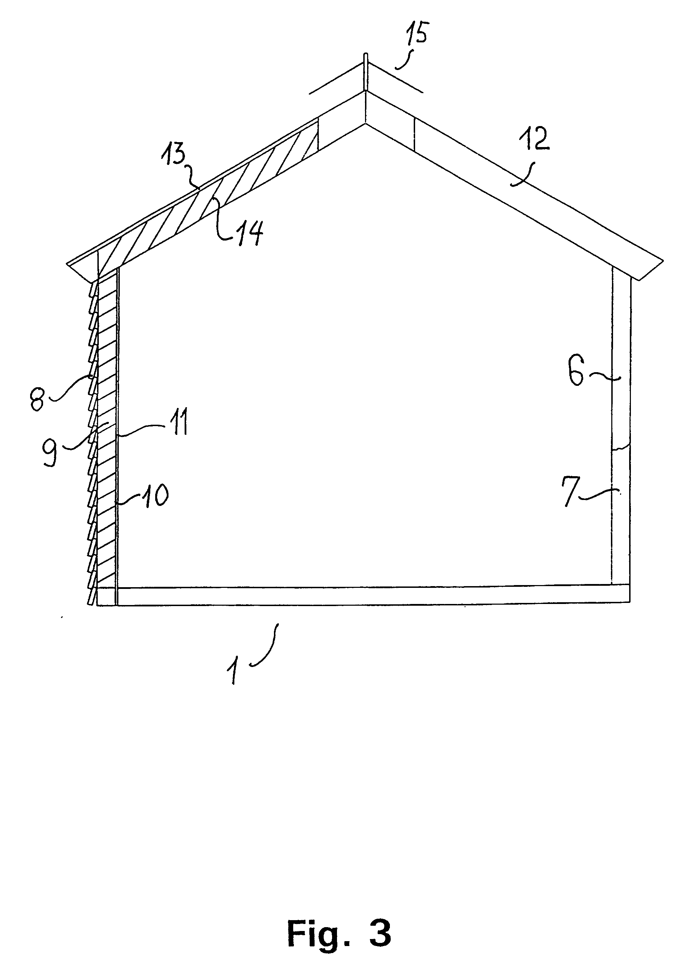

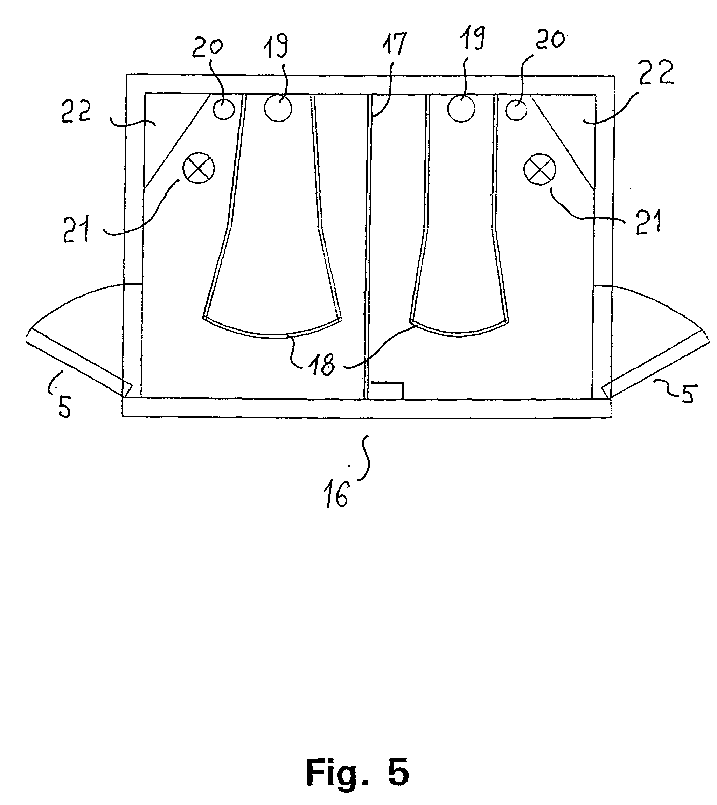

A standard hut 1 is shown in Figs. 1-4 and a number of modifications of this standard hut 1 to be used for specified purposes are shown in Figs. 5-11. The outer of the standard hut 1 is shown seen from the side in Fig. 1 and from one of the ends in Fig. 2 with the outer measures indicated in millimetres. The hut 1 is at each end, see Fig. 2, provided with a window 2 to enable ventilation of the hut 1 and to let daylight into the hut 1. The window 2 is hinged at the bottom and may be opened inwardly and locked in four different positions. The window 2 is preferably comprising two layers of transparent plastic or of glass which is relevant during periods of cold weather. The two layers reduce the loss of heat from the window 2. The hut 1 is also at each end provided with a door 3 in two parts. The upper part 4 of the door 3 is insulated on the inside with 50 mm insulation material and the lower part 5 of the door 3 may have an opening suitable for allowing passage of animals below a certain size. The hut 1 is open at the bottom. A cross-section of the standard hut 1 shown in Fig. 3 illustrates the construction of the hut 1.

The construction comprises a frame 6 made of square steel tubes of dimensions 100 x 100 x 3 mm but tubes of smaller dimensions may also be used. The tubes are welded together to make a solid frame for the hut 1. 47 x 100 mm laths 7 are mounted on the frame 6 and the material forming the walls is fastened to these laths 7. The walls are, from the outer side to the inner, made of 25 mm x 100 mm cross-section compreg boards 8, 100 mm rock wool or other insulating material 9, a 0.15 mm plastic membrane 10 to prevent moisture from the inside of the house from condensing on the outer part of the insulation 9, and a 12 mm plywood sheet 11. The roof comprises a number of 100 x 47 mm laths 12 on which 0.4 mm polyester-coated steel plates 13 are mounted. The roof is insulated with 200 mm rock wool or other insulating material 14.

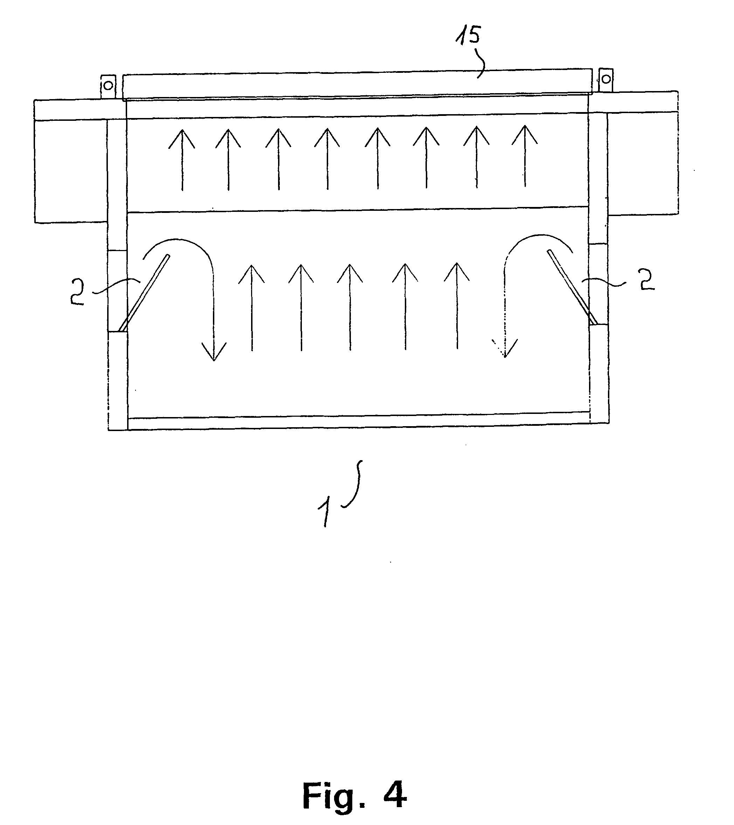

The compreg boards 8 and the steel plates 13 are preferably of a light green colour to give a harmonic overall view of the animal-breeding arrangement in the environment. A movable part 15 of the ridge may be elevated to provide ventilation of the hut 1. The movable part 15 of the ridge may be supported in the elevated state by a metal rod or by a hydraulic system and the elevation may either be performed manually or be controlled automatically according to the temperature and/or moisture inside the hut 1 or according to other parameters. Such a system may optionally also control the opening of the windows 2. Pigs, which are the preferred animals to be bred in the described breeding system, are sensible to draught but are also sensible to high temperatures and dust, for which reason the hut 1 is preferably adapted for ventilation. Draught along the floor where the pigs are situated is prevented by ventilating the hut 1 by opening the windows 2 and/or the movable part 15 of the ridge. The flow of air with the windows 2 and the movable part 15 of the ridge open is illustrated with the arrows in Fig. 4.

The chosen construction materials have a high durability, requires a minimum of maintenance and are easy to clean with a pressurised hot water cleaner. The compreg boards 8 may be replaced with thin steel plates such as those used for the roof which would make the construction lighter and less expensive. The outer measures of the standard hut 1 may also be changed to be in accordance with the standard sizes of containers, 20, 30 or 40 feet.

The standard hut 1 preferably has an area of between 10 $m^2$ and 20 $m^2$, such as between 12 $m^2$ and 16 $m^2$, such as approximately 14 $m^2$, thereby allowing approximately 25 porkers or 8 sows to accommodate the hut 1. Thus, a smaller number of huts 1 is needed for producing a certain number of porkers than is the case for known arrangements.

The height of the standard hut 1 is preferably at least 1,80 m, thus allowing personnel to stand up when being inside the hut 1, thereby improving the working environment for the personnel as compared to known huts.

The weight of the standard hut 1 is preferably between 1500 kg and 2500 kg, such as between 1700 kg and 2200 kg, such as approximately 2000 kg, and it is preferably adapted for being moved by means of a truck or other similar moving means. The standard hut 1 may optionally be provided with wheels or other equivalent means, so that it may be pulled by, e.g., a tractor or a similar vehicle. Thus, more attention has been directed to durability than to weight when the materials were chosen. The mean life time of the standard huts 1 is thus approximately 10 years. Furthermore, the standard hut 1 is very unlikely to be tipped over by strong winds.

The insulation of the standard hut 1 is better than the insulation of the known huts with heat transfer coefficients of approximately 0,20 W/(m$^2$.K) for the roof and approximately 0,33 W/(m$^2$.K) for the walls. Due to the better insulation and due to the fact that more pigs are kept together in the same hut 1, it is possible to keep a constant ventilation in the standard hut 1. Thereby a desired temperature, most preferably a constant temperature, as well as a desired humidity may be kept in the standard hut 1, thus reducing the risk of respiratory infections of the animals. Furthermore, the problems arising from the "lumping together" of the animals are eliminated, or at least reduced considerably.

The hut 1 may furthermore be provided with an opening in a side wall for accommodating a tube through which bedding such as straw may be blown. The bedding for the animals may thus be provided mechanically with a straw blower instead of providing it manually, thus saving manual work.

A first modification of the standard hut 1 is the farrowing hut 16 shown in Fig. 5 as seen from above. The farrowing hut 16 may accommodate two farrowing sows for which reason the hut 16 is divided in two parts with a 12 mm plywood sheet 17.

Each of the two parts of the farrowing hut 16 comprises a sow retainer 18, supply of drinking water 19, 20 for the sow and for the piglets, respectively, a 500 W heating lamp 21 for the piglets and a piglet shelter 22 where the sow cannot enter due to a low roof of the piglet shelter 22. The heating lamp 21 and the piglet shelter 22 are arranged so that the sow may see the piglets all the time when the sow is the sow retainer 18. The sows may enter and leave the hut 16 by the lower parts 5 of the doors 3.

The sow retainers 18 prevent the sows from lying on the piglets having already been born during the farrowing. The sow retainers 18 further allows personnel to get close to the sows during the farrowing in order to help the farrowing sows. Farrowing sows are known to be very aggressive, so it is very difficult to approach them if they are not retained in one way or another, since the sows may injure the personnel.

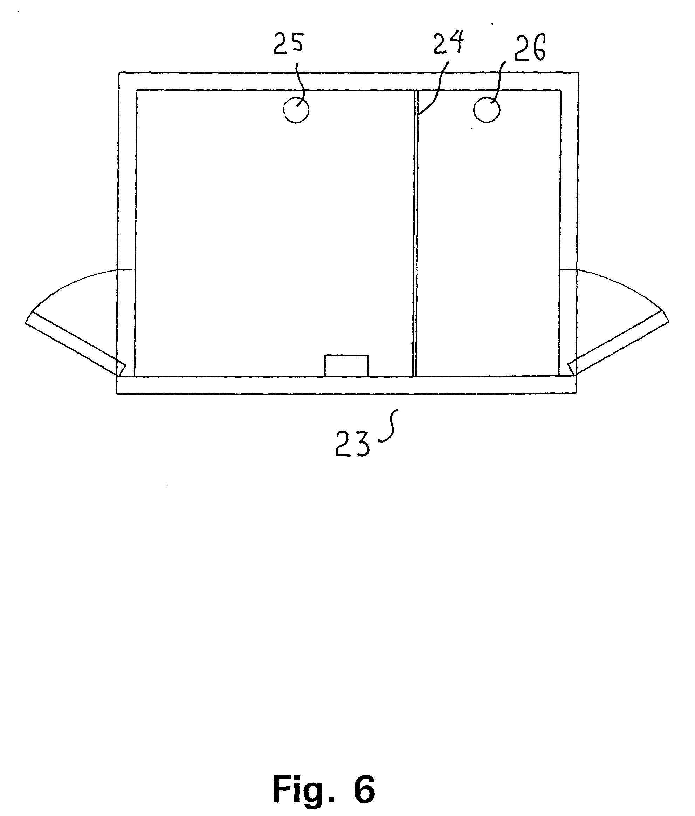

A second modification of the standard hut 1 is the family hut 23 shown in Fig. 6 for up to four sows with piglets until the piglets are 6-7 weeks old. The family hut 23 is divided in two parts with a 12 mm plywood sheet 24, the smaller part, approximately one third of the hut 23, being used by the piglets. The plywood sheet 24 is preventing the sows from entering the piglets part of the hut 23 but it is provided with one or more openings at the bottom large enough for the piglets to pass to and from the sows part of the hut 23. Likewise, the lower part 5 of the door 3 at the piglets side of the hut 23 is provided with an opening large enough only for the piglets to pass. The family hut 23 has supply for drinking water 25, 26 for the sows and for the piglets, respectively.

In the family hut 23 the piglets are weaned. The weaning takes place gradually, since the sow is still present. This reduces problems with diarrhoea, and it is therefore not necessary to give antibiotics to the piglets. Furthermore, the load on the sows is reduced, since the piglets start eating feed at an earlier time than is normally the case. The sows are therefore more fit to bear a new litter.

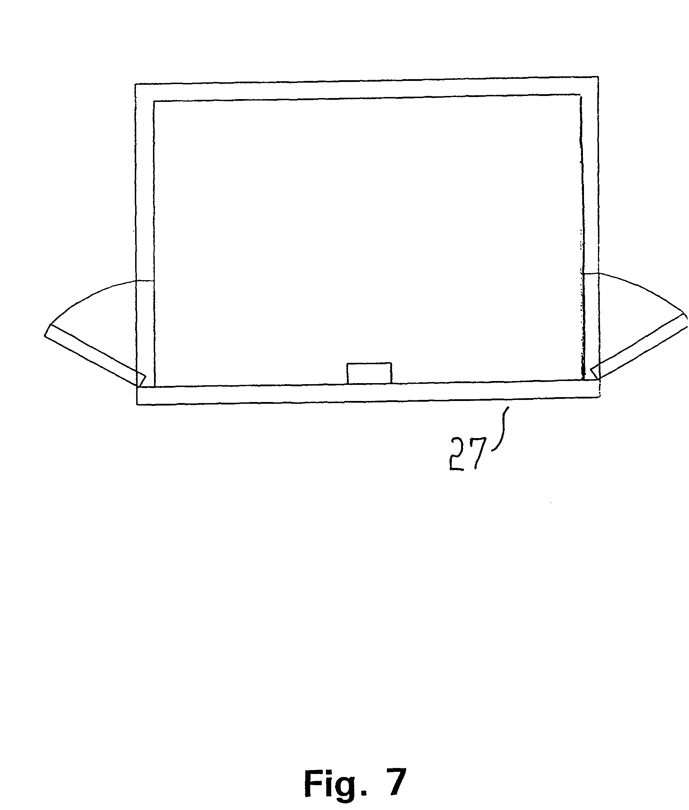

The third version of the standard hut 1 is a shelter hut 27 shown in Fig. 7 for providing shelter to sows without piglets or to porkers. This version does not comprise a floor.

A fourth modification of the standard hut 1 is the transponder-feeding hut 28 for sows with means for registration and separation of the sows. The transponder-feeding hut 28 has an inlet door 29 for letting the sow enter the hut 28, a gate 30 that closes behind the sow to prevent it from leaving the hut 28 through the inlet door 29, two fences 31, 32 to retain the sow within the feeding box, a transceiver 33 for communicating with the transponder preferably placed on the ear of the sow, a turnable feeding bowl 34 and two outlet doors 35, 36. The transponder-feeding hut 28 further comprises one or more containers for feed, means for leading the feed to the feeding bowl 34, motors or similar means for turning the feeding bowl 34 and for closing the gate 30 and a control unit for controlling the different functions, such as a Personal Computer (PC). The transponder-feeding hut 28 may further comprise means for marking the sows with e.g. spray paint, means for dosing medicine to the sows, means for determining the weight of the sow and/or means for registration of the body temperature of the sow, such as an infra red sensor. The functions may be integrated, so that e.g. the feeding bowl 34 is placed at one end of a plate on which the animal is weighted. The body temperature of the sow may also be registered with a sensor placed on the transponder. The registration of the body temperature serves both the purpose of determining whether the sow is ill and whether the sow is in heat. The transponder-feeding hut 28 may also comprise other means for determining whether the sow is in heat.

The transponder-feeding hut 28 is primarily used for automatic feeding of the sows according to their individual needs and for separation of sows for various reasons, such as illness of the animal, for insemination, for slaughtering or other reasons. The hut 28 may also be used for registration of the body temperature of the sow, to determine the weight of the sow, for administration of medicine to the sow, for marking the sow with paint etc. The hut 28 may also be provided with more than two outlet doors for enabling separation into more than two groups.

The events and functions of the transponder-feeding hut 28 are listed in Table 1.

Table 1:

| Events and functions of the transponder-feeding hut | | |
|---|---|---|
| Event | Primary function | Secondary function |
| Sow enters the transponder-feeding hut 28 and approaches the feeding bowl 34 | The gate 30 is closed behind the sow to prevent the sow from leaving and other sows from entering the hut 28 | |
| Sow puts its head into the feeding bowl 34 | Transponder is identified by the transceiver 33 | The body temperature of the sow may be registered (optional) |
| Sow eats and keeps its head into the feeding bowl 34 | Feed according to the sows feeding programme is led into the feeding bowl in portions | Medicine may be administered into the feed (optional). Other measures of whether the sow is in heat (optional). Marking of the sow with spray paint (optional) |
| Sow has finished eating and moves the head out of feeding bowl 34 | The feeding bowl 34 is turned either right or left if the transceiver 33 does not obtain response from the transponder for more than 20 seconds | The PC controls to which side the bowl 34 is turned depending on whether the sow should be separated |
| Sow leaves hut 28 through outlet door 35 or 36 to field or separation area | The gate 30 is opened 30 seconds after the feeding bowl 34 has turned to let the next sow into the hut 28 | The next sow may push the previous one out if it does not leave by itself |

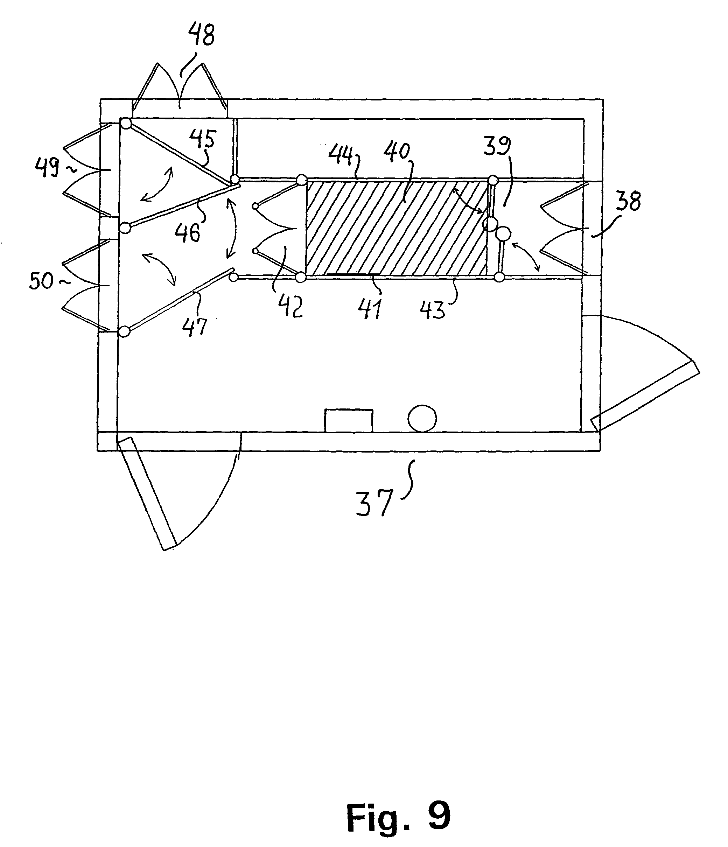

A fifth modification of the standard hut 1 is a separation hut for determining the weight of and separating the porkers. A separation hut 37 is shown in Fig. 9. The separation hut 37 comprises an inlet door 38, a first gate 39, a weight 40, a transceiver 41 for communicating with the transponder e.g. placed on the ear of the porker, a second gate 42, two fences 43, 44 to retain the porker within the weighting box, three turnable fences 45, 46, 47 for directing the porker towards the selected outlet door. The separation hut 37 is here shown with three outlet doors 48, 49, 50 for enabling separation of porkers into three different areas but the number of groups into which the porkers can be separated may be as desired. The separation hut 37 may further comprise means for measuring the thickness of the fat layer on the back of the porkers, means for marking the porkers with e.g. spray paint and/or means for registration of the body temperature of the porker, such as an infra red sensor. The body temperature of the porker may alternatively be registered with a sensor placed on the transponder. The body temperature serves as an indicator for whether the animal is ill. Additionally, the separation hut 37 may comprise electronic cameras for providing video pictures or still pictures of the animals and means for transferring these pictures to a surveillance system in order to support remote surveillance and control of the separation hut 37 and the whole system.

The separation hut 37 is primarily used for registration of the weight of the porkers (or sheep in case of a breeding system for sheep) and for separation of porkers for various reasons, such as separation due to illness or separation for slaughtering. Each porker on a field passes the separation hut 37 at least once a day and the capacity of the separation hut 37 is about 500-1500 porkers per day or even more. The separation hut may also be used for separating the porkers to different feeding places with different feed according to the weight of the individual porker, a so-called phase-feeding programme where different sizes of porkers are mixed on the same field. The phase-feeding programme is described elsewhere in this document.

The events and functions of the separation hut 37 are listed in Table 2.

Table 2:

| Events and functions of the separation hut 37 | | |
|---|---|---|
| Event | Primary function | Secondary function |
| Porker enters the separation hut 37 | The first gate 39 is closed behind the porker to prevent it from leaving and other porkers from entering the hut 37 | |

Table 2: (continued)

| Events and functions of the separation hut 37 | | |
|---|---|---|
| Event | Primary function | Secondary function |
| Porker approaches the second gate 42 which is locked | Transponder is identified by the transceiver 41 | Body temperature of porker may be registered (optional). Marking of porker with spray paint (optional). PC controls the position of the turnable fences 45, 46, 47 |
| Second gate 42 is opened, porker leaves the hut 37 through outlet door 48, 49, 50 | First gate 39 is opened 30 seconds after the second gate 42 is opened to let the next porker into the hut 37 | The next porker may push the previous one out if it does not leave by itself |

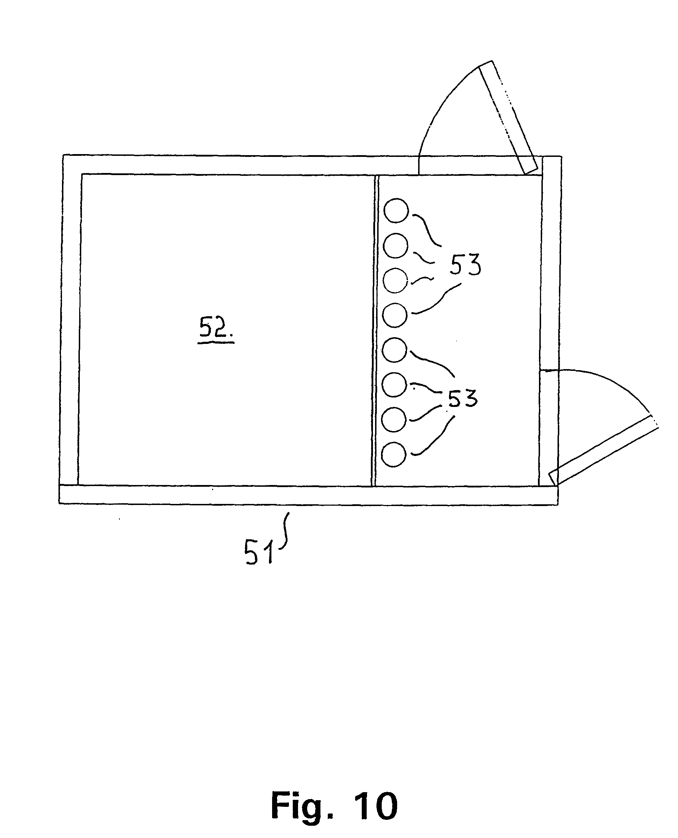

A sixth modification of the standard hut 1 is the watering hut 51 as shown in Fig. 10. The watering hut 51 is equipped with a 15 cubic metre water tank 52 and a number of drinking bowls 53 for the animals. The water tank 52 may be equipped with means for heating the water to prevent it from freezing during periods of cold weather. The approximate drinking water consumption is for porkers 18 litres/day in the summer and 9 litres/day in the winter period and for sows with piglets 30 litres/day.

In a conventional watering trough a substantial amount of bacteria may be present, especially during periods of hot weather. This problem is eliminated, or at least considerably reduced, in the watering hut 51, since the water is distributed to the animals when they need it. Therefore, the pigs do not have to drink more or less dirty and/or infected water which has been kept in a trough.

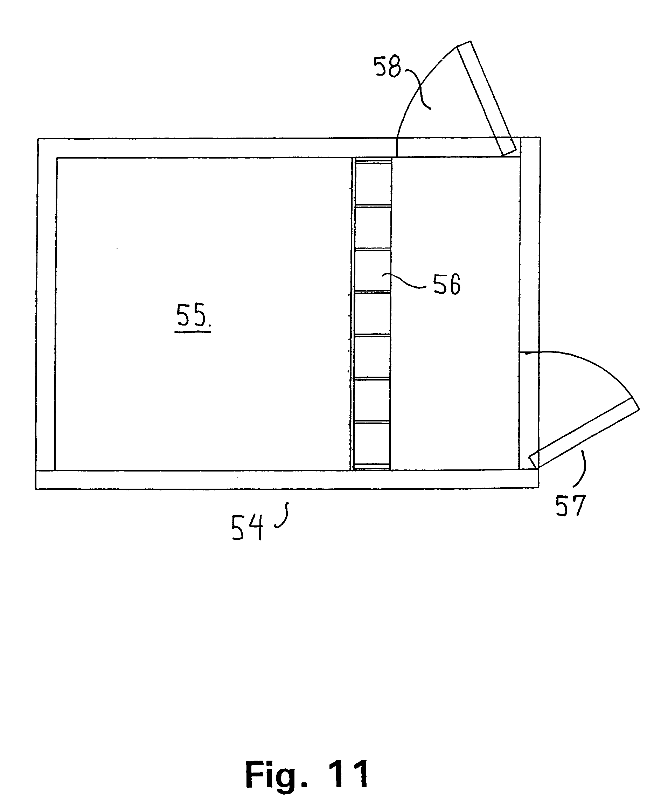

A seventh modification is the feeding hut 54 as shown in Fig. 11. The feeding hut 54 is equipped with a 15 cubic metre feed tank 55 and a feeding bowl 56 for the animals. The feeding hut 54 has no floor mounted in the area right in front of the feeding bowl 56. The ridge of the feeding hut 54 may not be elevated because pipe stubs for filling the feed tank 55 are mounted on the ridge. The feeding hut 54 has two doors 57, 58 for the porkers to enter and leave the feeding hut 54. The doors 57, 58 may optionally be one-way doors so that the porkers enter through one door and leave the hut 54 through the other in order to ensure a passing direction for the porkers. The feeding hut 54 may also be used in a simple version without the doors 57, 58 and be used for ad libitum feeding of a herd of animals.

Mobile mud-holes

The fields on which the pigs are held should be provided with mud-holes where the animals can cool themselves during periods of hot weather and where they can cover their skin with a layer of mud to prevent a sunburn. It is generally recommended for the well-being of the pigs that mud-holes are established on all fields where pigs are held. The pigs will, if they do not have access to a mud-hole, try to make one themselves by wallowing on a moist area of the field.

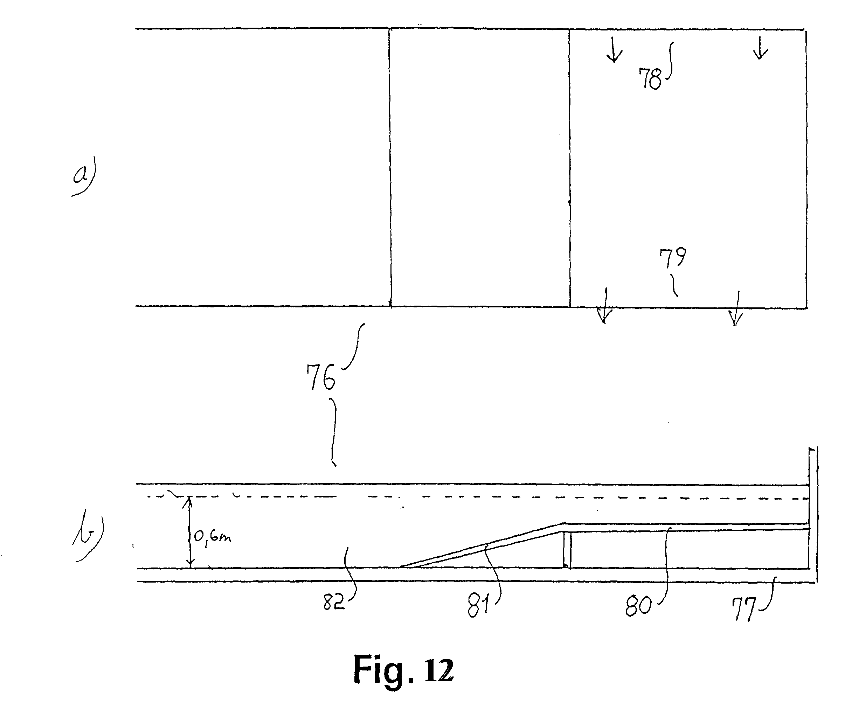

A mobile mud-hole, according to the invention, that optionally may be used as part of the breeding system is proposed. The mobile mud-hole has a solid membrane at the bottom and sides so as to substantially prevent the contents of the mud-hole from leaking to the environment. The membrane at the bottom must be resistant to the feet of the pigs so that it will not be worn or perforated when the pigs use the mud-hole. An example of a mobile mud-hole according to the invention is shown in Fig. 12 a) as viewed from above and in Fig. 12 b) as viewed in a cross-section. The mud-hole 76 has a chassis 77 made out of an open standard 20 feet steel-container of which the openings have closed by welding so that the mud-hole 76 may contain water. The animals may enter the mud-hole 76 from a ramp at one side 78 and leave by a ramp at the other side 79. These ramps are not shown on the figure. A platform 80 is placed inside the mud-hole 76 at the end where the animals enter and leave the mud-hole 76 and a ramp 81 is leading from the platform 80 to a part of the mud-hole 76 where the water is deeper 82, about 60 cm. The surface of the water is about 20 cm above the surface of the platform 80. The animals may use the deeper part 82 for bathing and cooling during periods of hot weather. The height of the platform 80 may be adjustable to facilitate adaptation of the mud-hole 76 to the actual size of the animals using it.

The mud-hole 76 is advantageously arranged on the field so that the pigs pass through the mud-hole 76 when they leave their shelter. Observations of pigs have shown that their elimination behaviour will be influenced by the contact with water so that they will mainly urinate but also defecate in the mud-hole 76 when they pass it, the mud-hole 76 functions therefore also as a kind of pig toilet. The latter especially takes place in the morning when the pigs leave the shelter where they have slept. The pigs need to eliminate and will, according to studies, do so at a moist area close to their sleeping area. The pigs will therefore be induced to urinate and optionally also defecate when they pass the about 20 cm deep water on their way from the shelter and to the field and feeding facilities. Furthermore, the pigs will also urinate and defecate in the mud-hole 76 when they use it for cooling and mud-bathing. The pigs are also, according to studies, induced to eliminate when they are close to other pigs in order to mark their presence on an area, for which reason the mud-holes 76 should be placed where the pigs are close to each other.

The mud-hole 76 has means for draining the contents and means for filling it with water and preferably a bowl for clean drinking water. The contents of the mud-hole 76 is frequently partly drained to a waste-water treatment plant, such as a constructed wetland etc., and the mud-hole 76 is then refilled with water. At least a part of the excrements from the pigs is in this way removed from the breeding system without loading the environment and the official field area demands for free-range pigs for environmental reasons may therefore be reduced which is very important for the profitability of a free-range breeding system for pigs. The part of the excrements that is removed via the mud-hole 76 depends on several factors but the experiences until now show that the part is of the order of 50-70% of the total amount of excrements.

Furthermore, the mud-hole 76 may be covered with a roof or the like in order to keep rain out from the mud-hole 76 so as not to increase the volume of water to be treated in the waste-water treatment plant. The mud-hole 76 may also comprise a separate waste-water/material container that parts of the content of the mud-hole 76 may be led to and stored in, so that maintenance and emptying of the mud-hole 76 only demands infrequent human effort. In addition, the mudhole may comprise means for providing drinking water to the pigs when visiting the mudhole.

General arrangement on the field

The entire production unit comprising one or several separate fields is placed on a suitable agricultural area, preferably on marginal ground. The field is covered with grass when the pigs are let onto it, both for providing supplementary feed for the pigs and for converting the excrements from the pigs into grass so as to reduce the loading of the surrounding environment.

The production unit area is enclosed by a fence of a height of approximately 1,2 m and an electric fence, the fences must be in accordance with the regulations imposed by the relevant veterinary authorities or other official authorities, and the production unit area may be divided into several smaller fields.

The arrangement of each field depends on whether it is intended for animals porkers or sows, whether the sows are pregnant or not, or whether they have piglets.

In order to facilitate different activities in connection with the pigs, such as controlled feeding, detection of their position in the field, controlled leaving of and return to the pig huts, selection for insemination and for slaughtering or monitoring of the animals, the entire pig stock, i.e. sows and porkers, is provided with earmarks containing transponders. The transponders may also be equipped with means for determining and transmitting the body temperature of the pig.

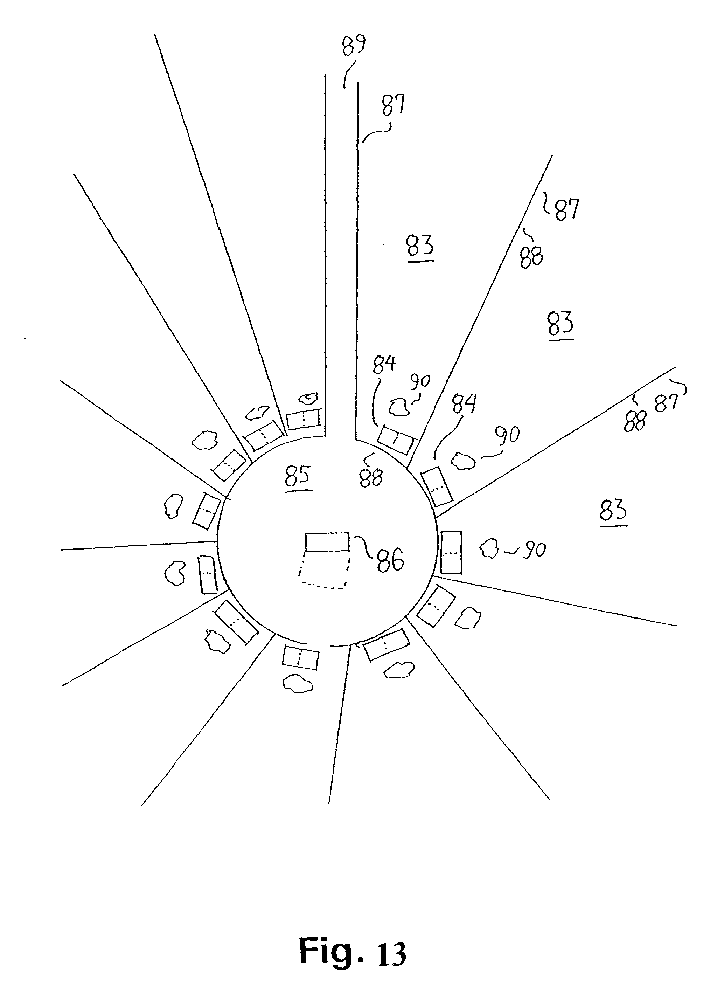

Examples of different types of fields that are adapted for different groups of animals are shown on Figs. 13-17. The general idea behind the design of the field types is that it from the arrangement of feeding facilities and shelter for the pigs is ensured that a suitable part of the field is used by the pigs so that wear on the field and delivering of excrements is not concentrated on smaller parts of the full area.

Sows from 7 days before to 14 days after farrowing

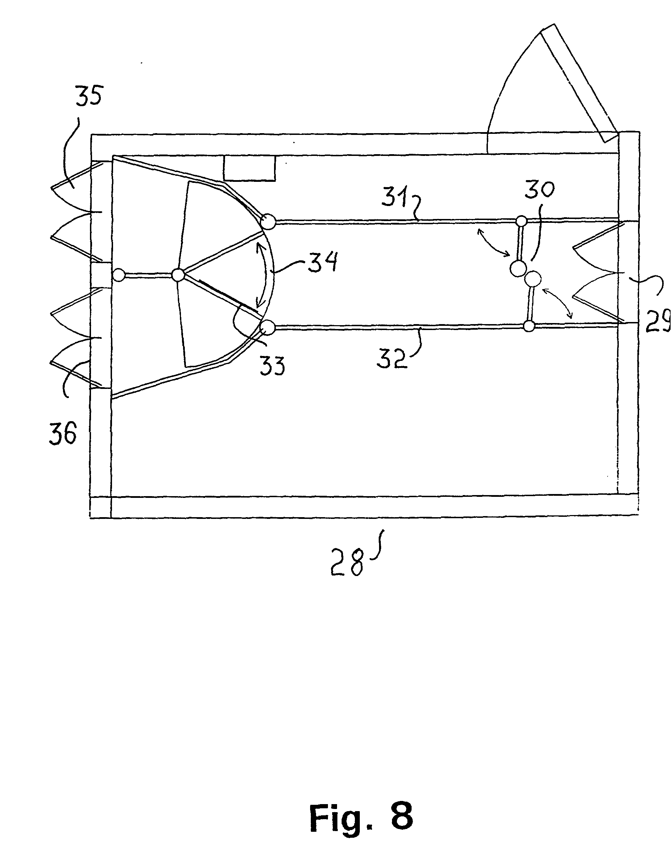

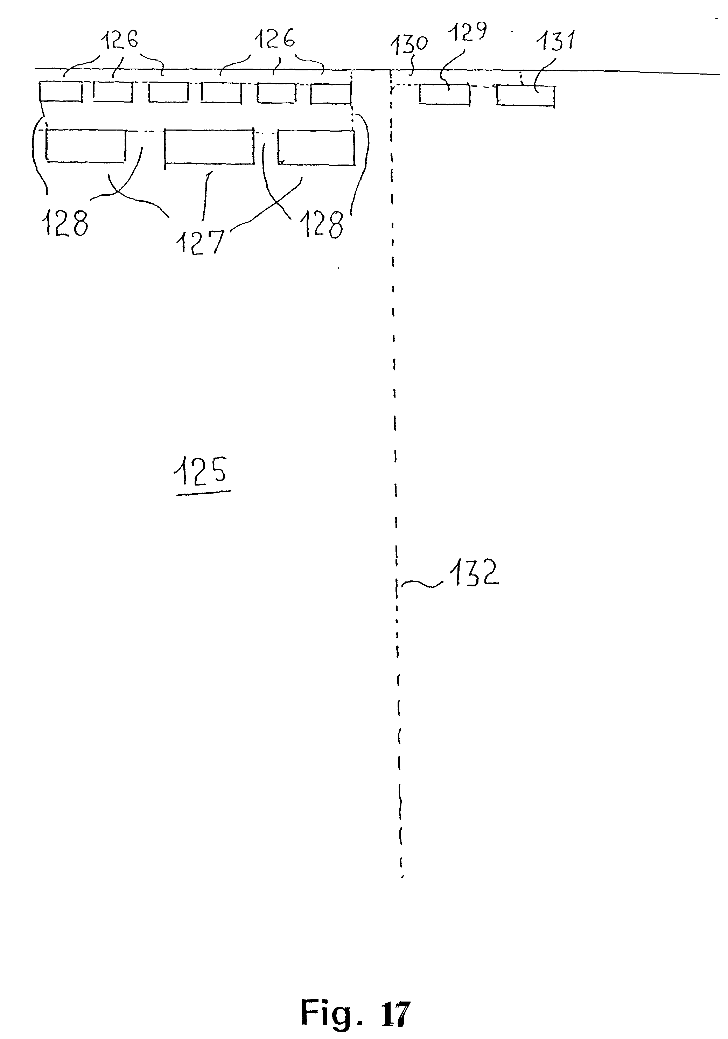

The sows are moved from a field of type E, see Fig. 17, to a field 83 of type A as shown in Fig. 13, approximately 7 days before the expected farrowing, so as to let the animal get acquainted with the new surroundings. The sows may be moved by means of a transportation box and a truck, in a transportation box provided with wheels or they may walk from one field to the next. These fields 83 are each equipped with a farrowing hut 84 such as the one 16 shown in Fig. 5, and the fields 83 are arranged around a common field 85 with feeding facilities 86, such as a transponder feeding hut 28 as shown in Fig. 8 or a feeding hut 54 as shown in Fig. 11. Each field 83 is separated from the adjacent fields with a fence 87 which also encloses the field at the end away from the common field 85.

Considering the presence of piglets, the pig houses are separated from each other by a further fence 88 of a height of approximately 10 cm which has the purpose of keeping the piglets within the enclosed field. This fence 88 also prevents the piglets from entering the common field 85.

Each field 83 also comprises a mud-hole 90 placed away from the common field 85 behind the farrowing hut 84. The mud-holes 90 may be of the type shown on Fig.12. but the environmental load on this type of fields is low and the demand for reducing this load is limited. An arrangement of the elements on the field 83 for ensuring that the whole area of the field 83 is used by the pigs is for the same reason not necessary.

The feeding facilities 86 are provided with water and electricity and both the feeding facilities 86 and the farrowing huts 84 are preferably placed in the vicinity of an access road 89.

Plenty of straw is supplied to the sow so that it may begin nest-building 2-3 days before farrowing. The sow is placed in the sow retainer 18 the last days before the farrowing, but is let out into the field 83 for one hour twice a day. The heating lamps 21 and the lights inside the hut 84 are switched on and the ventilation of the hut 84 may be reduced when the state of the sows udder indicates that the sow is about to farrow. Farrowing normally progresses without problems since the sow is in good shape due to its free-range life. However, human assistance may be required during the farrowing, e.g. if a piglet is stuck inside the sow and the sow retainer may in these cases prevent the person assisting the sow from being bidden or otherwise harmed by the sow.

The piglets, 8-16 in a litter, will soon after the farrowing learn to move under the heating lamps 21. The sow cannot enter the piglet shelter 22 or the area under the heating lamps 21 because it is fixed in the sow retainer 18, which prevents piglets from being overlaid by the sow. The sow is released from the sow retainer 18 2-3 days after the farrowing and may thereafter move freely in the hut 84. The piglets are let out into the field 83 4-10 days after the farrowing, depending on the weather. The piglets are ear marked with the sows number, receive a dose of vitamins etc. on the first day after the farrowing and the male piglets are castrated 3-7 days after the farrowing.

The sow has free access to water inside the farrowing hut 84 and is fed in the feeding hut 86. The farrowing hut 84 may accommodate two sows.

Sows with piglets until 3rd-8th week after farrowing

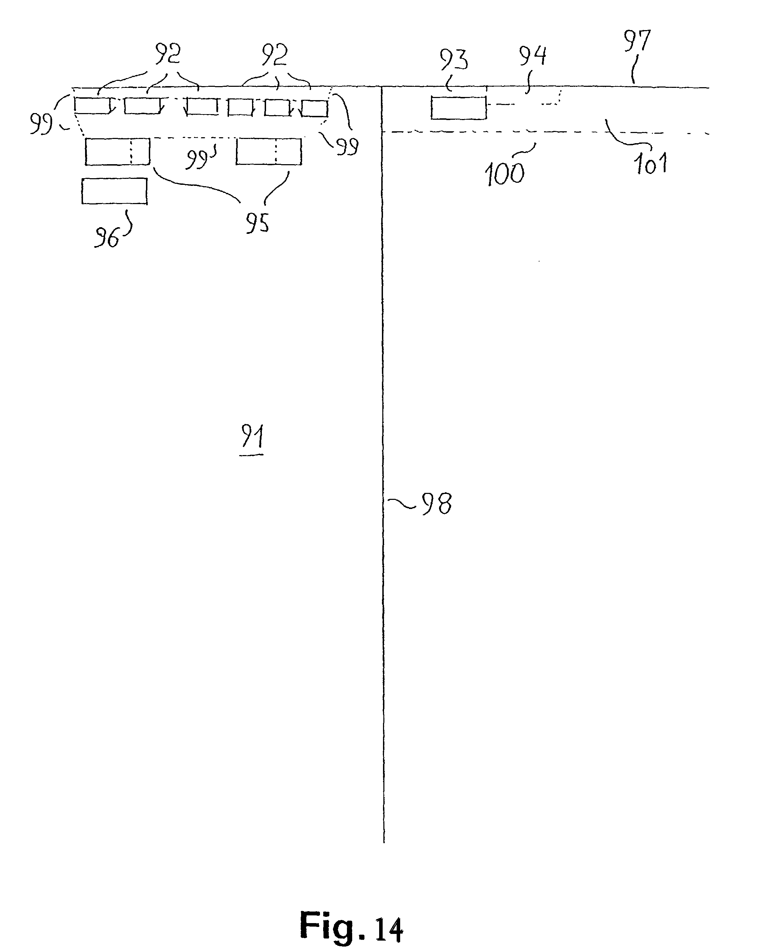

The sow together with its piglets are moved to a field 91 of type B, see Fig. 14 equipped with family huts 92 such as the ones 23 shown in Fig. 6, 3 weeks after the farrowing. The sows are fed in a feeding hut 93, which may be a transponder feeding hut 28 of the type shown in Fig. 8, and the piglets are fed once a day in the family hut 92. Water is supplied to both sows and piglets inside the family hut 92. A separation area 94 may be located adjacent to the feeding hut 93 for sows that for some reason, such as illness, are separated from the group of sows.

The field 91 is provided with mud-holes 95 that optionally are mobile mud-holes 76 of the type shown in Fig. 12. Waste-water from the mud-holes 95 may be let to facilities 96 for storage of the waste-water or for treatment of it, such as a constructed wetland or reedbeds.

The whole field 91 is enclosed by a fence 97 to prevent sows and piglets from leaving the field 91. The field 91 has a fence 98 arranged so that the sows are forced to pass most of the entire area of the field 91 in order to move between the family huts 92 and the feeding facilities 93. A fence 99 may be arranged around the family huts 92 and the mud-holes 76 allowing the piglets to pass but enforcing the sows to pass the mud-holes 76 when entering and leaving the family huts 92 so as to make the sows urinate and defecate in the mud-holes 96. Another fence 100 is arranged so that the piglets are prevented from entering the feeding area 101 for the sows.

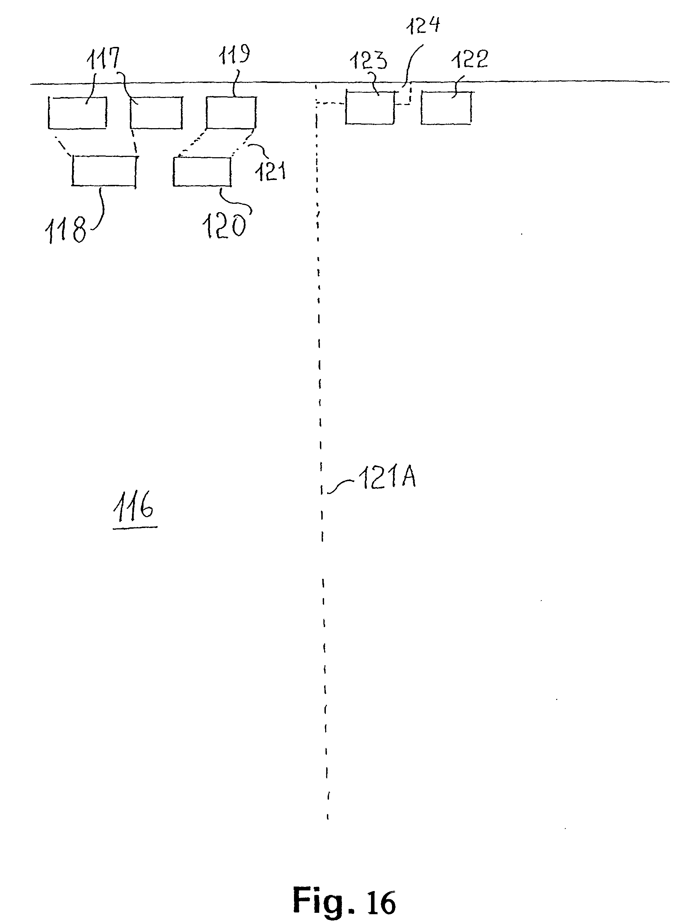

The piglets are weaned six weeks after the farrowing, at which time the sows are transferred to a field of type D, see Fig. 16. The piglets stay in the family huts 92 until they reach a weight of about 25 kg. The piglets are now called porkers.

Porkers until slaughtering

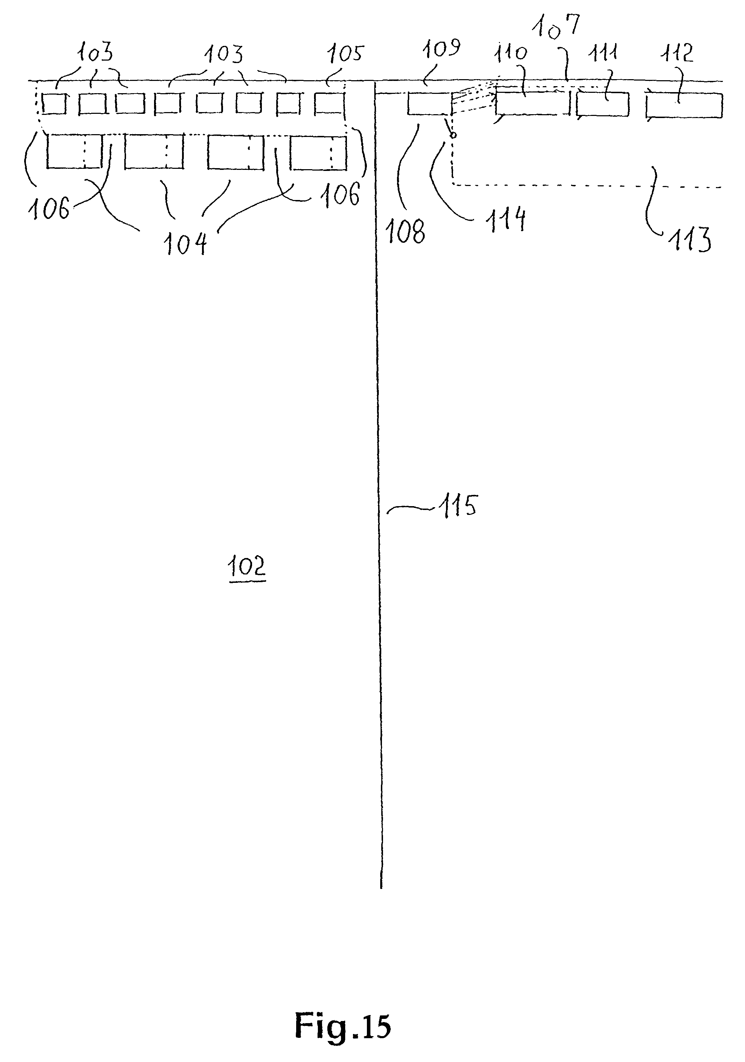

The porkers are, when they have reached a weight of about 25 kg about 8 weeks after the farrowing, transferred to a field 102 of type C, see Fig. 15, at which time a transponder is fastened to one or both ear of each porker in order to provide unique identification of the individual animal. According to the presently shown embodiment, the transponder will be fastened to the right ear. The field 102 is equipped with shelter huts 103, such as the ones 27 shown in Fig. 7 for providing shelter for the porkers. The field comprises mud-holes 104 which preferably are of a mobile type and of a construction that substantially prevents the contents of the mud-hole 104 from spilling into the environment as the mobile mud-hole 76 shown in Fig. 12. The area where the shelter huts 103 are situated also comprises a watering hut 105, e.g. of the type 51 shown in Fig. 10 and the shelter huts 103, the watering hut 105 and the mud-holes 104 are enclosed by a fence 106 to ensure that the porkers pass the mud-holes 104 when they leave the shelter huts 103, similar to the arrangement in field type B.

The field 102 comprises a separation and feeding area 107 with a separation hut 108 where the porkers are separated into the separation area 109 if they are ill, are to be slaughtered or for other reasons, or are led to the feeding huts 110, 111, 112. The porkers may in the shown embodiment be led to three feeding huts 110, 111, 112 according to their weight which is control parameter for which stage of a phase-feeding programme they belong to. This embodiment is relevant if porkers of different sizes are living together on a field 102. Alternatively, only one feeding hut 110 is required if all porkers on a field 102 are of approximately the same size. The porkers enter a closure 113 when they leave the feeding huts 110, 111, 112 from which closure they may enter the open field through a one-way gate 114.

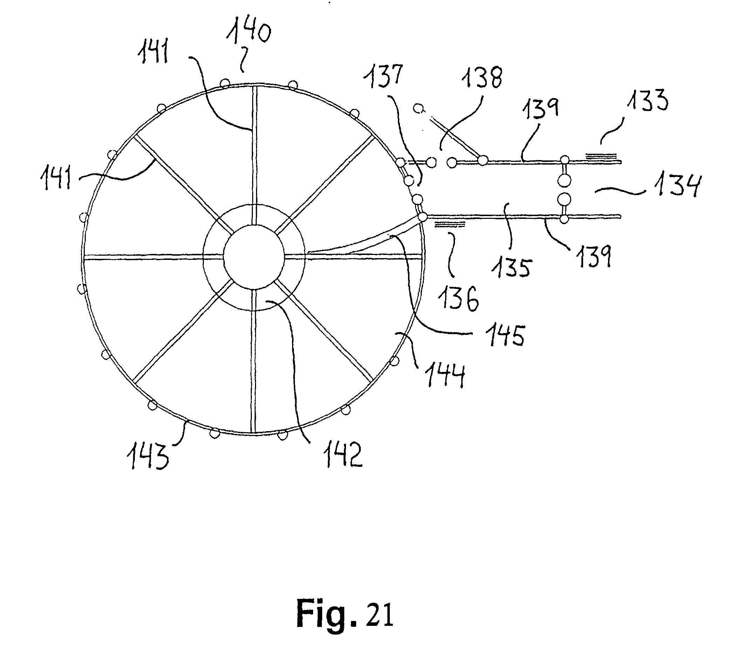

The separation hut 108 is equipped with means for identifying each porker, such as e.g. a transponder-reading system, and may further have means for registration of when a porker passes the separation hut 108 in order to monitor the behaviour of the individual porker, means for weighting the porkers and register the weight in a registration system, means for registration of the body temperature of the porkers, means for measuring the thickness of the fat layer on the back of the porkers and/or means for marking the porkers with e.g. spray paint. The arrangement for individual feeding of animals as shown in Figs. 21-23 may be used alternatively.

The field of type C is also equipped with a fence 115 arranged so that the porkers are forced to pass most of the entire area of the field 102 in order to move between the shelter huts 103 and the separating and feeding area 107.

The number of porkers per shelter hut varies during the period from 50 porkers at the beginning to 25 porkers at the end.

Sows after weaning

The sows are after weaning placed in a field 116 of type D as illustrated in Fig.16, where they are separated from the pregnant sows. The sows will naturally come into heat 5-7 days after weaning of the piglets. However, the free-range sows will often not come into heat by themselves in a period of the year, in northern Europe such as Denmark typically from July to December since they live out in the open, for which reason the sows are fed 2-3 times the ordinary amount of feed, are given a vitamin injection, are placed together with other sows that are about to come into heat and are optionally placed where they may see, hear and smell a boar. These changes will normally induce the sow to come into heat whereafter it is artificially inseminated twice. A number of sows are inseminated at the same time to facilitate that differences in the size of the litters may be reduced on the second day after farrowing by moving piglets from one sow to another.

The field 116 is equipped with a number of shelter huts 117, such as the ones 27 shown in Fig. 7 for providing shelter for the sows. The field 116 comprises one or more mud-holes 118 which preferably are of a mobile type of a construction that substantially prevents the contents of the mud-hole 118 from spilling into the environment as the mobile mud-hole 76 shown in Fig. 12. The shelter huts 117 and the mud-holes 118 are enclosed by a fence to ensure that the sows pass the mud-holes 118 when they leave the shelter huts 117, similar to the arrangement in field type B and C. The field may further be equipped with a shelter hut 119 and a mud-hole 120 for a boar that is not allowed to mix with the sows for which reason a fence 121 is enclosing the area for the boar. The proximity of the boar affects the sows to come into heat.

The field comprises a watering hut 122, e.g. of the type 51 shown in Fig. 10, a feeding hut 123, preferably a transponder-feeding hut, e.g. of the type 28 shown in Fig. 8, where the sows are fed according to their individual need and programme and an enclosure 124 for separated sows.

The field of type D is also equipped with a fence 121A arranged so that the sows are forced to pass most of the entire area of the field 122 in order to move between the shelter huts 117 and the feeding hut 123 and the watering hut 122.

The feeding hut 123 is equipped with means for identifying each sow, such as e.g. a transponder-reading system, and may optionally also have means for registration of when a sow passes the feeding hut 123 in order to monitor the behaviour of the individual sow, means for weighting the sows and register the weight in a registration system, means for registration of the body temperature of the sows, means for administrating medicine to the sows and/or means for marking the sows with e.g. spray paint. Further, the feeding hut 123 may have means for separating a sow due to various reasons, such as the sow being ill, the sow being in heat etc.

Pregnant sows

After insemination, the sow is transferred to a field 125 of type E as shown on Fig. 17. A number of pregnant sows are placed on the field 125 together with one or more boars and the sow will stay there for about 110 days until about one week before farrowing at which time it is moved to a field of type A, see Fig.13.

The field 125 is equipped with a number of shelter huts 126, such as the ones 27 shown in Fig. 7 for providing shelter for the animals. The field 125 comprises one or more mud-holes 127 which preferably are of a mobile type of a construction that substantially prevents the contents of the mud-hole 127 from spilling into the environment as the mobile mud-hole 76 shown in Fig. 12. The shelter huts 126 and the mud-holes 127 are enclosed by a fence 128 to ensure that the animals pass the mud-holes 127 when they leave the shelter huts 126, similar to the arrangement in field type B, C and D.

The sows in the field 125 of type E are preferably being fed individually in a transponder feeding hut 129 according to a feeding programme, similar to the arrangement in field D with the same options as for the feeding hut 129. The feeding of the pregnant sows is very important to ensure that the piglets develop properly. The field 125 also comprises a separation area 130 and a watering hut 131. The sows in this field 125 may further be separated because the farrowing is near, about one week before. The sows are moved from here to a field of type 2 approximately a week before expected farrowing.

The field of type E is also equipped with a fence 132 arranged so that the animals are forced to pass most of the entire area of the field 125 in order to move between the shelter huts 126 and the feeding hut 129 and the watering hut 131.

Phase-feeding programme

The porkers are during a phase-feeding programme fed with typically 3-6 different types of mixed feed, the change from one type to the next being dependent on their weight. The benefit of phase-feeding is that each type of mixed feed is composed for porkers of a particular size and weight, for which reason the porker utilises an optimal amount of protein, vitamin and other nutrition in the feed. This means that a smaller amount of feed is consumed by the porker for it to reach a certain weight and that the amount of e.g. phosphor and calcium in the excrements is reduced which again means that a smaller field area is needed for receiving the excrement in order to keep the environmental load below certain limits.

The porkers are in conventional breeding systems kept in the same pigsty from they reach a weight of about 25 kg and until they are ready for slaughtering and they are all fed by the same automatic feeding system. The introduction of a phase-feeding programme requires that the pigs are either moved several times between sties with different feeding systems or that one or more additional automatic feeding system(s) is/are installed parallel to the existing system.

A phase-feeding programme is easily incorporated in the breeding system according to the invention. The porkers in one field are all of the same size so that their feeding hut is reloaded with mixed feed of the type according to the average weight of the porkers. Alternatively, the porkers in one field are mixed in sizes and they are in the separation hut separated to two or more feeding huts according to the weight of the individual porker.

Monitoring, registration and control programmes

The monitoring, registration and control of the animals are performed with standard equipment, such as ear transponders, stationary and hand held transceivers for communicating with the transponders, means for temperature registration, means for marking the animals, means for measuring the thickness of the fat layer on the back of the porkers, weights etc. This equipment is commonly commercially available and may by purchased from a number of producers, such as Schauer (Switzerland), Laprova (Denmark) or SKIOLD datamix a/s (Denmark).

The software for controlling the necessary processes are also commonly commercially available and may be purchased from a number of producers. An example of a software producer is AgroSoft (Denmark). However, the software must be modified in order to fulfil the special demands for functioning with a highly automated free-range pig-breeding system.

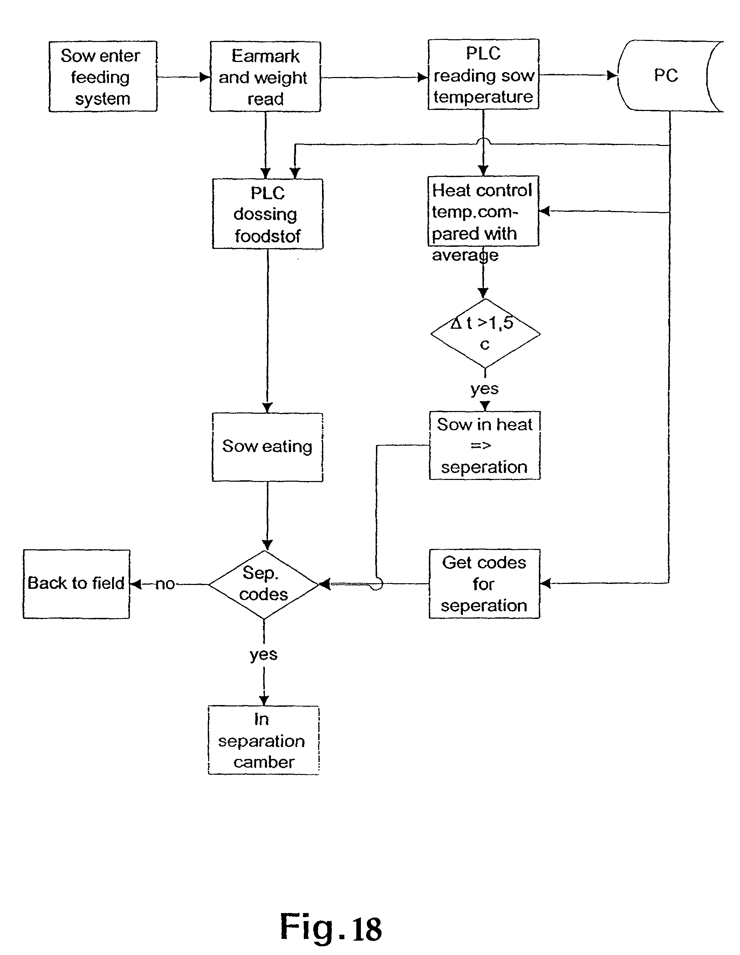

Flow-charts for modifications performed according to the invention in standard software are shown in Figs. 18-20 as examples of how the required functionalities may be obtained. These modifications could be implemented in any software for monitoring, registration and/or control of animals in a breeding system.

The flow-chart in Fig. 18 illustrates a modification of a programme controlling a transponder feeding and separation system such as the one installed in the transponder feeding hut as shown in Fig. 8. The purpose of the modification is to include a new separation code for sows that are in heat which is detected by a measurement of the body temperature of the sow. The modification is given in the column beginning with "PLC reading sow temperature". The temperature of the sow is compared to the average of the body temperatures of the sows measured recently in order to compensate for variations in outdoor temperature. In case the body temperature is more than 1.5 °C higher than the mean body temperature, the sow is deemed to be in heat and a separation code for the sow is set and it is separated, either immediately or at a later time.

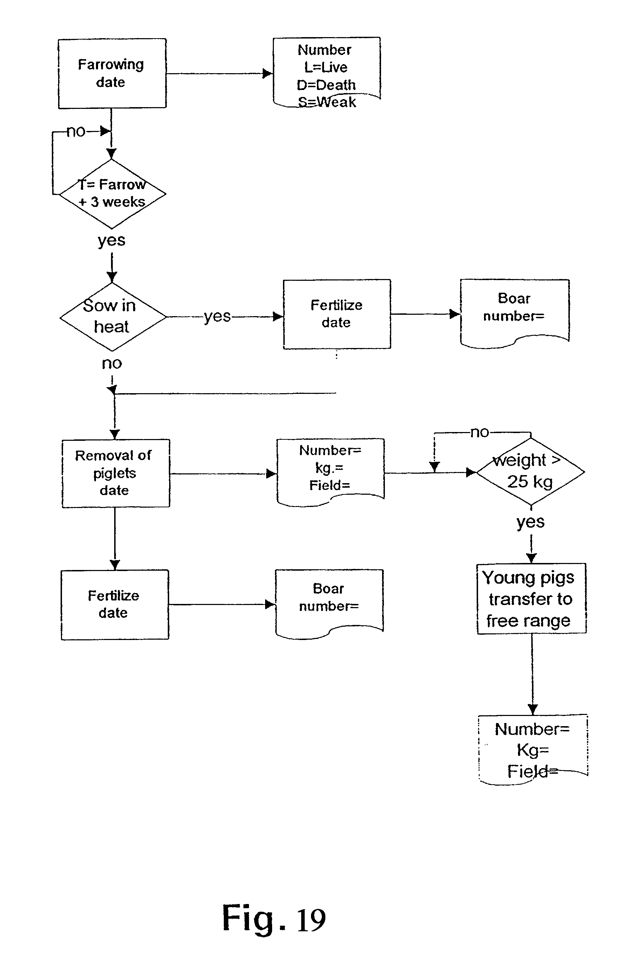

The flow-chart shown in Fig.19 illustrates a modification that is needed due to the fact that the piglets are weaned after six weeks instead of after three weeks, which is common in traditional pig-breeding systems. Therefore, the sow may come into heat before the piglets are weaned, that is between three and six weeks after farrowing. This is not an option in standard software where it is a demand for entering fertilising data that the removal of piglets have been registered.

The new functionality implemented in the software is that the sow in the period between three and six weeks after farrowing may be registered as being in heat and fertilising data may also be registered, before the registration of removal of piglets have been made.

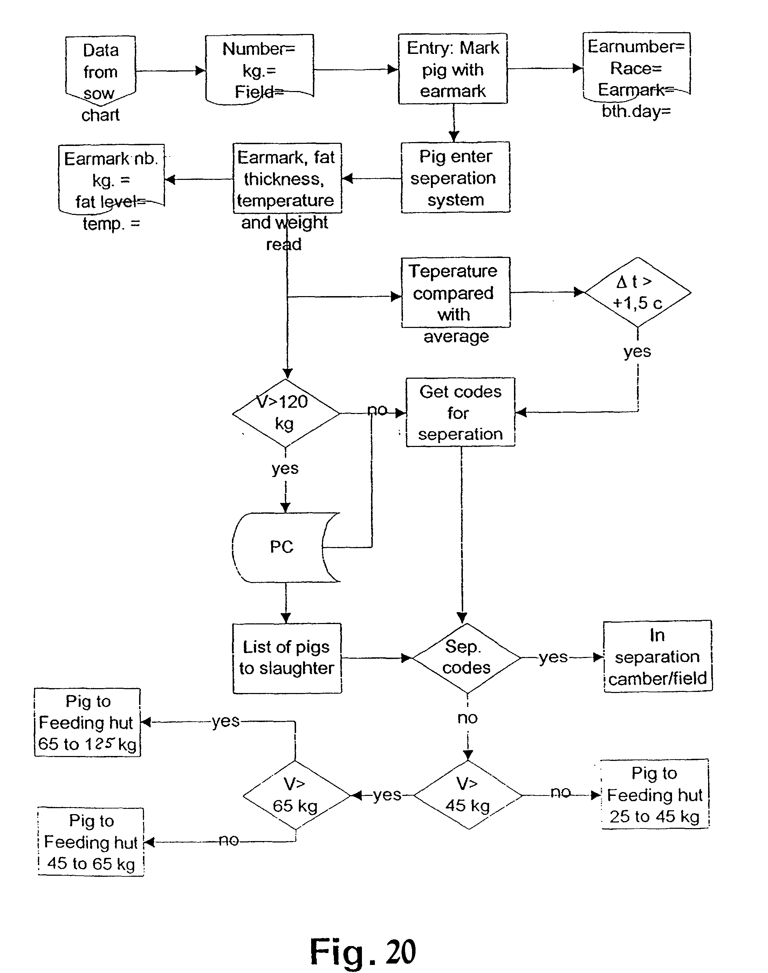

The flow-chart shown in Fig. 20 illustrates the modifications needed to obtain a monitoring and control system for porkers that are fed according to a phase-feeding programme. Each porker is uniquely identified with a transponder and the porker is identified and the weight, and optionally the body temperature and thickness of the fat layer, is registered when the porker enters the separation and registration system, such as the system installed in the separation hut 37 shown in Fig. 9. The porker may be put on a list of porkers to be slaughtered if its weight exceeds a given limit, in this case 120 kg. Porkers on the slaughter-list may be given a separation code for slaughtering. The body temperature is compared to a mean body temperature and the porker is given a separation code for illness if its body temperature deviates more than a given limit from the mean temperature. Further, the porkers may be led to different feeding facilities according to their weight and a phase-feeding programme. The porkers may, in the example shown in Fig. 20, be separated for feeding in three groups, 25-45 kg, 45-65 kg and 65-125 kg.

The purpose of employing a monitoring, registration and separation system for porkers is also to ensure that a high quality level of the meat can be guarantied and that animals that are ill, which may be detected by deviation in temperature, declination in growth rate or absence from feeding or by other indications, are separated for treatment or destruction. This function is also important for ensuring the well-being of the animals.

Example of breeding system for producing 1500 porkers/year

An example is given for a breeding system according to the invention for producing 1500 porkers per year. The porkers are being fed according to a phase-feeding programme with six types of mixed feed and the amount of feed is measured in the common standard Feed Unit (FU).

| Feed consumption: | |
|---|---|
| 70 sows/boar producing 22 piglet per sow per year and eating 1320 FU/year | 92,400 FU |
| 1500 piglets from farrowing to 30 kg<br>2.2 FU per kg growth<br>Free-range addition 8% | 79,380 FU |
| 1500 porkers from 30 kg to 45 kg<br>2.4 FU per kg growth<br>Free-range addition 8% | 58,320 FU |
| 1500 porkers from 45 kg to 65 kg<br>2.7 FU per kg growth<br>Free-range addition 8% | 87,480 FU |
| 1500 porkers from 65 kg to 125 kg<br>3.0 FU per kg growth<br>Free-range addition 8% | 291,600 FU |
| Total feed consumption/year | 609,180 FU |
| Total feed consumption/kg porker | 3.25 FU |

Field area demands

The fields may, according to the present official regulations in Denmark, be loaded with 20,000 FU/hectare/ year if pigs are kept on the field every second year and a nitrate-consuming crop is grown the years in between. It is also a demand that grass has been growing on the field at least one year before the pigs are let onto the field. The grass is preferably sown simultaneously with the nitrate-consuming crop. Therefore, the field area demand for the breeding system is one hectare per 10,000 FU/year since the fields may be used for keeping pigs on half of the time at the most.

The breeding system is preferably split into two parts: a first part where the sows (and boars) are kept as well as the piglets until they reach a weight of about 25-30 kg and a second part for the porkers. This first part of the breeding system has the largest need for humane interaction in connection with farrowing, insemination and tending of the piglet. The piglets are sensitive to illness etc. and may e.g. easily catch diarrhoea which raise demands for treatment and care. This first part of the breeding system has a field area demand, according to the previous calculations and numbers, of 18 hectare.

The second part of the breeding system demands much less humane interaction and is to a higher degree automatic. This part may very well be situated at a distance from the first part and may be a completely separate production unit from the first part, except that porkers are delivered from a first part to a second part. The porkers are marked with a transponder before being delivered to the second part and relevant data for the individual porker may also be delivered from the first part to the second part. The second part of the breeding system has a field area demand, according to the previous calculations and numbers, of 44 hectare.

It should be noted that the Danish official demands for field areas for free-range pigs are below the official demands of the European Union for which reason the mentioned demands probably will increase in the future. On the other hand, the demands for field area may be reduced if the mobile mud-hole is used to collect a part of the excrement from the pigs if this effect is documented properly to the relevant authorities.

A field may be used in an optimal way by dividing the field into three equal parts and moving the porkers between the three parts so that one part is used in September to December, the second part in January to April and the third part in May to August. The number of animals equals a load of 20,000 FU/hectare/year for the whole field. In this way each part is loaded with triple load but only for a third of the year and crops may be grown on two thirds of the field from May to August, thus improving the utilisation of the field.

Individual feeding

An embodiment of the invention concerning individual feeding of animals is shown in Figs. 21-23. The animals are preferably pigs and may be sows or porkers. The described methods and devices are very suitable to free-range animals living in a larger herd as well as in a minor herd.

The arrangement comprises separation equipment having a transceiver 133 for communicating with transponders in the earmarks of each of the animals for identification of the individual animals, an inlet gate 134 that is opened for an animal if the identification made by means of the transceiver 133 indicates that the animal should be fed, a scale 135 for determining the weight of the animal that have entered the separation enclosure defined by the gates 134, 137, 138, and the fence 139, a second transceiver 136 for verifying the identification of the animal, a first outlet gate 137 for providing access to the feeding carrousel 140 and a second outlet gate 138 for separating individual animals from the rest of the herd. Furthermore, the arrangement is equipped with an infra red sensor (not shown) for detecting the temperature of the skin of the animal that has entered the equipment and for communicating the measured value to a control unit.

The feeding carrousel 140 is divided with fences 141 into eight parts of a suitable size for accommodating an animal, each part comprising a feeding bowl 142 with supply for feed and optionally drinking water. The carrousel 140 on the figure is turning counter-clockwise with a rotational speed of about four turns per hour so that an animal will have seven eighths of a quarter of an hour (about thirteen minutes) to eat.

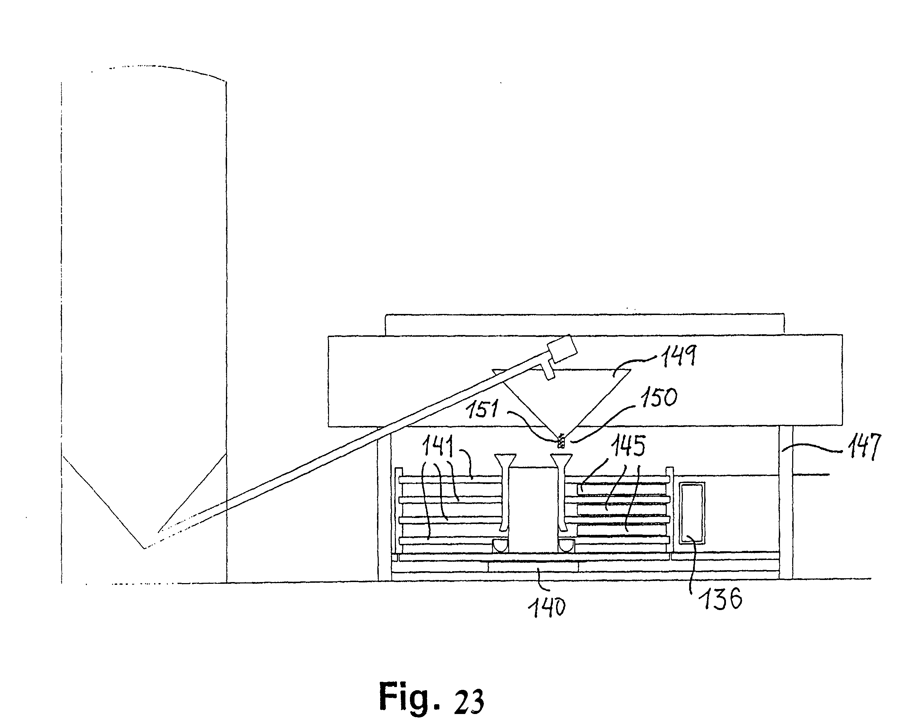

The carrousel 140 is surrounded by a stationary fence 143 that covers most of the circumference of the carrousel 140 except at the gate 137 leading to the carrousel 140 and to the left of the gate 137 at the outlet position 144 where the animals are leaving the carrousel 140. An arm 145 is provided for expelling the animals from the part being at the outlet position 144. The arm 145 is slightly curving in the horizontal plane. The fences 141 dividing the carrousel 140 and the arm 145 are formed from slats arranged so that the fences 141 may pass the arm 145, as being apparent from Fig. 23.

The arm 145 may alternatively be mounted on the centre part of the carrousel 140 or it may be constructed as a turntable with approximately the same diameter as the carrousel 140 and turning in the same direction just above the floor of the carrousel 140. The centre of the turntable is situated just outside the perimeter of the carrousel 140 so that the animal are forced to jump onto the turntable which turns the animal and move it out from the part of the carrousel.

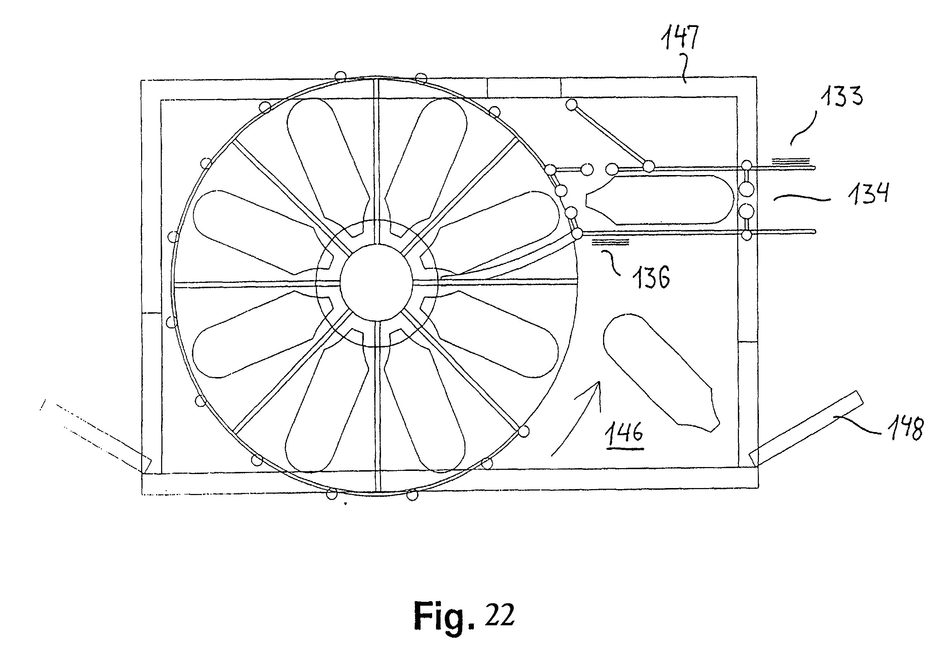

The animals leave the carrousel 140 to an enclosure such as a part 146 of the feeding hut 147 as shown on Fig.22. The animals may only leave the enclosure through a one-way door 148, thus assuring that the animals pass the feeding system in one direction.

The supply of feed to the feeding bowls 142 may be provided from a feed container 149 arranged under the ceiling of the feeding hut, the feed being led from the container 149 through an opening 150 in the lower part of the container to the feeding bowls 142. A screw conveyor 151 measures out a specified amount of feed to the individual animal that is fed from the specified feeding bowl 142.

The arrangement has a safety system to ensure that the animals will not suffer any harm in case of a malfunction of the system. The safety system comprises means for detecting an increased load on the mechanism for driving the carrousel 140 so as to detect e.g. whether an animal has become wedged. In case such an incident or another major malfunction is detected, the safety system stops the rotation of the carrousel 140 and a valve connecting a reservoir of pressurised air with a number of pneumatic cylinders is opened, causing the gates 134, 137 to open and the fences 141 dividing the carrousel 140 into parts to be raised, thus allowing the animals within the arrangement to leave it. The control system of the arrangement is permanently or temporarily connected via communication means to a surveillance system and the safety system provides a signal to the surveillance system in case of a malfunction. The arrangement may be reset from the surveillance system in case the malfunction is remotely correctable by the surveillance system

The arrangement is used for controlled feeding of the individual animal of a free range herd. The animals are preferably pigs for which individual feeding is advantageous for both sows and porkers that are raised for meat production. Both sows and porkers are fed with different compositions and amounts of feed depending on a number of circumstances. The feeding of the sows depends on whether they are in heat, are pregnant, are nursing piglets, are about to farrow, etc. and the feeding of the porkers depends on their age and weight, the so-called phase feeding programme. The individual control of the feeding of the animals ensures that the stronger or more aggressive animals do not keep other animals of the herd from the feed, which for large herds of porkers ensures a more homogeneous distribution of size and weight of porkers of the similar age and a generally better well-being and health of the animals. The free-range herds of porkers of similar age or of mixed age is often large, comprising 100, 200 or even 500 or more animals.

The feeding arrangement is equipped with a control unit, such as a computer having a logical unit and memory means for storing data, input and output units and means for controlling the operation of the arrangement. The feeding arrangement is advantageously used together with computer software for carrying out a method for feeding the animals, the computer software being stored within the memory means and controlling the steps of the operation of the arrangement. The operation of the feeding arrangement for a herd of animals each having an earmark comprising a transponder for unique identification is described below. The operation of the control unit is controlled by the computer software.

The transceiver 133 registers that an earmark is present within the sensing area of the transceiver 133 and it is determined by the control unit whether the animal is to be fed or separated, in which two cases the animal is allowed into the separation arrangement. Commonly, the animals are fed twice a day. If the animal is allowed into the separation arrangement, the inlet gate 134 is opened. When the animal has entered the enclosure and is standing on the scale 135, the second transceiver 136 registers the identity of the earmark so as to confirm the identification of the animal and to determine that the animal is placed correctly within the enclosure so that the inlet gate 134 may be closed. The weight of the animal is determined from a signal received by the control unit from the scale 135 and the weight is entered into a record of the individual animal. Optionally, the arrangement also comprises means for measuring the surface temperature of the animal by measuring the infrared radiation from the animal, and alternatively or additionally the earmark may comprise a temperature sensor and means for transferring data regarding the measured temperature to the control unit. The registration of the body temperature serves the purposes of determining whether an animal is ill or, in case of a sow, determine whether the sow is in heat. The arrangement may also comprise means for measuring the thickness of the fat layer on the back of the animals, primarily for porkers.

The control unit now determines whether the animal should be fed, in which case the outlet gate 137 to the feeding carrousel 140 is opened, or the animal should be separated due to illness, a sow being in heat, for slaughtering or for other reasons, in which case the outlet gate 138 for separation is opened. The separation arrangement may optionally comprise more than one outlet gate for separation for different reasons and purposes, or the outlet gate 138 may lead to an enclosure having a plurality of outlet gates for selective separation. The opening of the outlet gate 137 to the feeding carrousel 140 is synchronised with the angular position of the carrousel 140 so that each animal is led to an open part of the carrousel 140. The outlet gate 137 or 138 is closed and the inlet gate 134 is ready to open for another animal at a predetermined time period, e.g., 10 seconds, after the outlet gate 137, 138 is opened. The outlet gate 137, 138 does not close if the animal has not left the enclosure completely but the inlet gate 134 is opened so that the following animal will push the preceding animal out from the enclosure.

Feed is provided in the feeding bowl 142 in an amount determined by the control unit by activation of the screw conveyor 151. Optionally, the arrangement comprises more than one feed container 149 and the feed may be mixed individually for each animal.

Furthermore, a supply of drinking water may be provided within each part and means for dosing medicine into the feed for the individual animal may also be provided.

A record for each animal of the herd is kept within the memory means of the control unit. The record comprises the transponder identification number, an identification number, the day of birth of the animal, identification of sow and boar and weight at the age of 6-8 weeks. Optionally, the daily registered weight, temperature, amount of feed, the hour and minute of each daily feeding and/or the thickness of the layer of fat is also kept on record. For sows, data regarding expected heat, data regarding the day of insemination and day of expected farrowing and/or data regarding size of litter may also be kept on record.

A number significant of the utilisation of the feed, the E number, may be calculated as follows based on the recorded data:

$$E = \frac{\text{weight, day 2 - weight, day 1}}{\text{feed consumption per day * number of days}}$$

= weight unit growth per consumed weigh unit of feed

The amount of feed for porkers is determined from a table stored within the memory means of the control unit and comprising data connecting the age, normal weight and amount and mixture of feed for the animals. If the weight of an animal deviates to the lower side from the normal weight with more than a certain percentage, e.g. 5%, the amount of feed for that particular animal is increased over a period. The lower weight may be caused by illness for which reason the effect of the increased amount of feed is monitored over a period and the animal is separated from the herd if the desired effect is not achieved. The amount of feed is in general raised for all animals if the temperature is low and/or for certain combinations of temperature and wind for animals living outdoor, because it takes more energy for the animals to keep the body temperature up. The amount of feed is typically raised with 5% due to cold weather but the amount of feed may be adjusted to more than one other level so that a more precise adaptation to the environment of the animals may be made.

The control unit is preferably connected to a surveillance system via a private or public communication network or a combination thereof. The communication between the person or persons who look after the free-range breeding arrangement and the herd of animals will most often take place via the network. The control unit may prepare operating reports to the surveillance system with a predetermined interval and/or on demand, and reports regarding malfunctions of the system are sent to the surveillance system. An operating report may comprise data regarding the individual animal and statistical data about the number of animals within a weight interval, the temperature of the animals, etc. The statistical data from the control unit may advantageously be used for optimising the raising of the porkers with regard to amount and composition of feed, compensation for change of type of feed, for monitoring the effect of changes in the physical environment of the animals, such as the huts, the area of the field, the arrangement on the field, etc.

The separation of animals for slaughtering is typically performed by communicating the number of animals of a given weight that is desired to be separated from the herd to the control unit prior to the actual fetching of the animals, e.g. twelve hours before. Alternatively or additionally, the animals for slaughtering may be chosen due to another parameter such as the thickness of the fat layer on the back of the animal, the time period in which the separation is to take place, based on the registered habits of the animals, the E number of the animals, etc.. The control unit then selects the desired number from the animals passing the separation unit and separates these animals to an enclosure provided with drinking water. The progress of the separation process may be monitored at distance via the communication network. The control unit corrects the records on the herd after the animals for slaughtering have been fetched and the data regarding the separated animals may be transferred to the surveillance system so that the data may follow the animals/the meat, optionally all the way to the consumer. In an alternative approach, information is requested from the control unit regarding how many animals of a given size that may be separated within a given time period and the number is predicted based on the registration of the habits of the individual animal. A list of the animals chosen for separation may be supplied from the control unit to the user for manually editing of the list an returning it to the control unit.

A separation command given to the control unit could as an example comprise:

the breeding unit within a larger system from which the animals should be selected,
the feeding unit(s) within the breeding unit to separate from,
the number of animals,
the time period in which the animals should be separated,
the date on which the separation should take place,
the weight range of the animals,
the thickness range of the fat layer on the back of the animals,
the upper limit of the registered temperatures of the animal within a given time range,
the outlet to which the animals should be separated.

The control unit may also be connected with equipment for providing pictures and/or sound from one or more locations of the breeding system and in particular for the separation and feeding arrangement and for transferring these recordings to the surveillance system.

**Claims**

1. A breeding system for use in an open air environment for a number of animals and comprising

   a) means for automatic and electronic registration of data for the individual animals,
   **characterised in that** the system further comprises

   b) means for recording the registered data of each animal in a registration unit,

c) means for controlled and individually regularly feeding of the animals based on the recorded data of each animal, and

d) an open-air field area wherein the means a) and c) are arranged.

2. A breeding system according to claim 1, wherein the open-air field is enclosed by a fence.

3. A breeding system according to claim 1 or 2, further comprising means for automatically identifying each of the individual animals.

4. A breeding system according to any of claims1-3, further comprising means for automatically separating and/or isolating an identified animal from one or more of the other animals.

5. A breeding system according to claim 4 wherein the means for separation and/or isolation is integrated with the feeding means.

6. A breeding system according to any of the preceding claims further comprising at least one hut for the animals.

7. A breeding system according to claim 6 wherein the hut is movable.

8. A breeding system according to any of claims 6 or 7 wherein the hut is substantially enclosed.

9. A breeding system according to any of claim 6-8, wherein the hut for the animals is adapted according to the sex, age and number of animals for which the hut is providing shelter.

10. A breeding system according to any of the preceding claims adapted for breeding pigs.

11. A breeding system according to claim 10 wherein the pigs are porkers of at least an age of 28 days.

12. A breeding system according to any of claims 6-10, wherein the hut for the animals is a farrowing hut for pigs adapted for farrowing, the farrowing hut comprising at least one sow retainer and at least one piglet shelter.

13. A breeding system according to any of claims 6-10, wherein the hut for the animals is a family hut for pigs adapted for housing at least one sow with piglets of the age up to about 3-8 weeks, the hut being divided into at least two parts, one part allowing the piglets to be separated from another part housing the sow or sows, the separation being by means of e.g. a separating sheet with an opening having such dimensions that the sows, but not the piglets, are prevented from passing through the opening.

14. A breeding system according to any of claims 4-13, wherein the means for feeding the animal is by use of a transponder-feeder and the means for separating and/or isolating the animals comprises an inlet door and an outlet door and optionally a gate between the inlet and outlet doors preventing the animal from leaving through the inlet door.

15. A breeding system according to any of the preceding claims, wherein the means for automatically identifying an individual animal comprises a mark or a label connected to the animal, the mark or label comprising and/or obtaining information which is automatically registered by the registration unit.

16. A breeding system according to claim 15, wherein the means for automatically identifying an individual animal comprises a mark or a label connected to the animal, the mark or label comprising and/or obtaining information which is send to the registration unit.

17. A breeding system according to any of the preceding claims, wherein the means for automatically identifying an individual animal comprises a label or a mark fastened on the animal, such as on the ear.

18. A breeding system according to any of claims 15-17, wherein the registration unit is activated by the presence of the animal bearing the mark when the animal is located in or is entering feeding means such as the one described in claim 14.

19. A breeding system according to any of the preceding claims, wherein the means for controlled feeding of the animal is electronically connected with the means for automatically identifying the individual animal.

20. A breeding system according to claim 19, wherein the means for controlled feeding of the animal automatically provides an identified animal with a specific amount and/or mixture of feed based on the identification of the animal.

21. A breeding system according to claim 20 and comprising means for determining the weight of identified animals, wherein the specific amount and/or mixture of feed is determined in response to the weight of the identified animal.

22. A breeding system according to any of the preceding claims, wherein the means for controlled feeding of the animal automatically recognise whether the individual animal is provided with a specific amount of feed within a predetermined period of time.

23. A breeding system according to any of claims 4-22, wherein the means for automatically separating and/or isolating an identified animal from one or more of the other animals is a separation unit comprising an inlet door for an animal entering the unit and means for directing the animal towards one of at least two outlet doors.

24. A breeding system according to claim 23, wherein the means for directing the animal toward one of the outlets doors comprises a turnable fence.

25. A breeding system according to claim 23 or 24, wherein the means for directing the animal toward one of the outlets doors is driven automatically.

26. A breeding system according to any of claims 23-25, wherein the means for directing the animal toward one of the outlets doors is driven automatically based on one or more information concerning weight, body temperature, thickness of the fat layer on the back of the animal, feed consumption and identification of the individual animal.

27. A breeding system according to any of claims 4-26, wherein the means for automatically separating and/or isolating an identified animal from one or more of the other animals, the separation being integrated with the feeding means, is located within the movable hut.

28. A breeding system according to any of the preceding claims further comprising one or more means selected from means for measuring the weight of an identified animal, means for controlling the content/degree of subcutaneous fat on selected areas of an identified animal, and means for controlling body temperature of an identified animal.

29. A breeding system according to any of the preceding claims further comprising means for registering any possible medical or other treatment with respect to any of dosage, time and type of treatment.

30. A breeding system according to any of claims 7-29, wherein the movable hut is substantially provided with isolated shelter walls or has an insulating property of less than 0.6 W/m$^2$.

31. A breeding system according to any of claims 6-30, wherein the hut further comprises means for ventilation.

32. A breeding system according to any of claims 1-9, wherein the animals are sheep.

33. A breeding system according to any of the preceding claims, wherein the open-air field area comprises at least one device for containing water, a so-called "mud-hole".

34. A breeding system according to claim 33 wherein the mud -hole is arranged on the field so that the animals leaving the shelter will enter the mud-hole on their way to the means for controlled feeding of the animals.

35. A breeding system according to claim 34 wherein the mud-hole has such dimensions that it may contain at least one of said animals and having a design so that said animals are able to enter and leave the mud-hole, the mud-hole being substantially isolated in its lower part from the field with a barrier so as to substantially prevent substances contained in the mud-hole from leaking to the environment.

36. A breeding system according to any of the preceding claims comprising a mud-hole with draining means for discharging parts of the contents of the mud-hole, the system further comprising connecting means, such as a pipe or a tube, connected to the draining means for leading the discharged part from the mud-hole.

37. A breeding system according to claim 36 comprising a mud-hole connected to a waste-water treatment system, such as a natural reedbed, wherein the waste-water treatment system is connected to the mud-hole through the draining means for receiving the discharged part from the mud-hole.

38. A breeding system according to any of the preceding claims comprising a mud-hole with means for adding liquid to the mud-hole.

39. A breeding system according to any of the preceding claims comprising a mud-hole which is movable.

40. A breeding system according to claim 39, wherein the movable mud-hole is placed on the field without removing the field material or digging holes and in such a way that the surface of the field is substantially protected from damage from the mud-hole or from the animals entering the mud-hole.

41. A breeding system according to any of the preceding claims further comprising means for detecting and selecting and animal ready for slaughtering.

42. A breeding system according to any of the preceding claims adapted to hold between 25 and 100.000 animals for breeding.

43. A breeding system according to any of claims 2-42, wherein the fenced-in field area is no less than 10 square-meter per animal in the system.

44. An arrangement for use in a breeding system according to any of claims 1-43 for individual feeding of animals of a herd comprising

   a plurality of enclosures of a size suitable for comprising one of the animals, each enclosure having an inlet and an outlet and means for selectively switching the inlet and outlet between a for the animals passable state and a non-passable state, each enclosure also having a feeding bowl for containing feed,
   container means for containing a supply of feed,
   means for leading the feed from the container means to each of said bowls,
   a common inlet through which the animals may enter into each of the enclosures and means for selectively allowing animals to pass the common inlet,
   means for directing animals from the common inlet to a specified enclosure selected among the plurality of enclosures, and
   control means for controlling the operation of the arrangement.

45. An arrangement according to claim 44 and further comprising means for performing a unique identification of each animal of the herd, the means being arranged so as to allow for identification of an animal before letting it into the arrangement.

46. An arrangement according to claim 45, wherein the identification means comprises

   a plurality of transponders each having a unique identification code, each animal of the herd being equipped with a transponder for individual identification, and
   a transceiver for reading the identification codes of the transponders, the transceiver being arranged near the common inlet so as to allow for identification of an animal before letting it into the arrangement.

47. An arrangement according to claim 45 or 46 and further comprising an inlet enclosure of a size suitable for comprising one of the animals, the common inlet forming the inlet of the inlet enclosure, the inlet enclosure having means for selectively allowing an animal within the enclosure to leave the inlet enclosure and having means for determining at least one of the following characteristics of each identified animal passing the common inlet and for transmitting the at least one characteristic to the control means:

   a) the weight of the animal,
   b) the skin temperature of the animal measured from the infra red radiation from the animal,
   c) the body temperature of the animal measured by means of a sensor mounted on the animal, and

    d) the thickness of the fat layer on the back of the animal

**48.** An arrangement according to any of claims 45-47 and further comprising means for selectively separating identified animals having passed the common inlet to at least one separation enclosure.

**49.** An arrangement according to any of claims 44-48, wherein the plurality of enclosures are arranged on a platform, the arrangement having means for rotating the platform, switching between the passable state and the non-passable state being provided by the rotational movement of the platform.

**50.** An arrangement according to claim 49, wherein the opening defining the inlet of each enclosure also defines the outlet of said enclosure.

**51.** An arrangement according to any of claims 45-50, wherein the control means can control the amount of and optionally the type of feed supplied to the individual identified animal.

**52.** An arrangement according to any of claims 44-51 and comprising means for adjusting the amount of feed supplied to the individual animal according to the temperature and optionally the wind speed the animals are subjected to.

**53.** An arrangement according to any of claims 44-52, wherein the herd of animals comprises a plurality of porkers.

**54.** A method for use in a breeding system according to any of claims 1-43 for feeding porkers of a herd, each porker being uniquely identifiable by means of identification means, comprising the steps of

    identifying one of the porkers and transmitting the identification to a control unit,
    allowing the porker into a feeding enclosure in which it is the sole porker, and
    allowing the porker to leave the feeding enclosure,

    **characterised in that** the method further comprises the steps of

    determining an individual amount of feed for each porker by means of the control unit, and
    feeding each porker the determined individual amount of feed when the porker is present within the feeding enclosure,

    wherein each step is controlled by means of the control unit.

**55.** A method according to claim 54, wherein each porker is equipped with a transponder having a unique identification code and the identification step comprises the step of reading the identification code of the transponder of one of the porkers with a transceiver.

**56.** A method according to claim 54 or 55 and comprising the step of determining at least one of the following characteristics of each identified porker and store said determined characteristics) in storage means of the control unit:

    a) the weight of the porker,
    b) the skin temperature of the porker measured from the infra red radiation from the animal,
    c) the body temperature of the porker measured by means of a sensor mounted on the porker, and
    d) the thickness of the fat layer on the back of the porker.

**57.** A method according to claim 56, wherein at least the weight of the porker is determined and the amount of feed fed to the individual porker is determined from the weight of said porker.

**58.** A method according to any of claims 54-57, wherein the amount of feed fed to each porker is adjusted for the air temperature and optionally for the wind speed the porkers are subjected to.

**59.** A method according to any of claims 54-58 and comprising the steps of

    determining whether an identified porker should be separated from the herd by means of the control unit, and
    activating separation means by means of the control unit so as to separate said porker into a separation enclosure.

**60.** A method according to any of claims 57-59, wherein at least a temperature of the identified porker is determined and the separation of the identified porker may be effected in response to the determined temperature of said porker.

**61.** A method according to any of claims 54-60, wherein the control unit is at least temporarily connected via a data communication network to a remote surveillance system whereby the operation of the control unit may be remotely monitored and at least partially controlled.

**62.** A method according to any of claims 54-61, wherein the method is employed with a feeding arrangement according to any of claims 44-53.

**63.** An arrangement according to any of the claims 44-53,wherein the control unit is permanently or temporarily connected over a communication network with a surveillance system from which the function of the system may be surveyed and at least partially controlled.

**64.** An arrangement according to claim 63 wherein different persons or institutions have entrance or partially entrance to the communication network.

**65.** An arrangement according to claim 64 wherein the persons or institutions include one or more selected from the following; one or more farmer(s), one or more controller(s), a veterinarian, one or more investor(s), a slaughterhouse, and food supplier.

**Patentansprüche**

**1.** Züchtungssystem, die für die Anwendung auf dem Freilandsbereich für mehrere Tiere vorgesehen ist, das mit

a) Mitteln für automatisierte und elektronische Datenregistrierung einzelner Tiere ausgerüstet ist,
**dadurch gekennzeichnet, dass** das System weiterhin
b) Mittel für die Speicherung der bereits registrierten Angaben jedes Tieres in die Steuereinheit;
c) Mittel für kontrollierte und individuel regelmässige Fütterung der Tieren, die auf die gespeicherten Daten jedes Tieres basiert, und
d) Feldbereich mit den darauf eingerichteten Mitteln a) und c) einschliesst.

**2.** Züchtungssystem nach Anspruch 1, wobei der Freilandsbereich mit einem Zaun eingeschlossen ist.

**3.** Züchtungssystem nach Anspruch 1 oder 2, das weiterhin Mittel für die automatisierte Identifikation jedes einzelnen Tieres einschließt.

**4.** Züchtungssystem nach einem oder mehreren der Ansprüche 1 - 3, das weiterhin Mittel für die automatisierte Trennung und/oder Isolierung des identifizierten Tieres von einem oder mehreren Tieren einschließt.

**5.** Züchtungssystem nach Anspruch 4, wobei die Mittel für die Abtrennung und/oder Isolierung mit den Fütterungsmitteln integriert sind.

**6.** ZüchtungssystemZüchtungssystem nach einem oder mehreren der vorangehenden Ansprüche, das weiterhin zumindest eine Hütte für Tiere einschließt.

**7.** Züchtungssystem nach Anspruch 6, wobei die Hütte verschiebbar ist.

**8.** Züchtungssystem nach einem oder mehreren der Ansprüche 6 oder 7, wobei die Hütte im wesentlichen eingeschlossen ist.

**9.** Züchtungssystem nach einem oder mehreren der Ansprüche 6-8, wobei die Tierhütte dem Geschlecht, Alter und der bestimmten Anzahl der Tiere entsprechend angepasst und als ein Schutzraum beschaffen ist.

**10.** Züchtungssystem nach einem oder mehreren der vorangehenden Ansprüche, das für Schweinezüchtung angepasst ist.

**11.** Züchtungssystem nach Anspruch 10, wobei als Schweine die Ferkel im Alter von zumindest 28 Tagen verstanden sind.

**12.** Züchtungssystem nach einem oder mehreren der Ansprüche 6-10, wobei es als Tierhütte eine für die Abferkelung der Schweine angepasste Abferkelungshütte verstanden ist, die wenigstens aus einem Lager für die Sau und einem Schutzraum für die Ferkel besteht.

**13.** Züchtungssystem nach einem oder mehreren der Ansprüche 6-10, wobei es als Tierhütte eine Hütte für eine Schweinefamilie verstanden ist, die für die Unterkunft von zumindest einer Sau mit Ferkeln im Alter von bis etw. 3-8 Wochen angepasst ist und die zumindest in zwei Teile aufgeteilt ist, indem es in einem Teil die Ferkel von der im anderen Teil befindlicher Sau oder Säuen abgetrennt werden können, und die Abtrennung wird z.B. mit einem Trennungsblech mit einer dermaßen dimensionierten Öffnung erzielt, so dass den Säuen, jedoch nicht den Ferkeln zu verhindern, durch die Öffnung durchzugehen.

**14.** Züchtungssystem nach einem oder mehreren der Ansprüche 4-13, wobei die Mittel für die Fütterung des Tieres die Einrichtungen mit einem Antwortgerät und die Mittel für die Trennung und/oder Isolierung des Tieres einbeziehen und mit einer Eingangstür und einer Ausgangstür und gegebenenfalls einem Tor zwischen der Eingags- und Ausgangstür, das dem Tier das Ausgehen durch die Eingangstür verhindert, ausgestattet sind.

**15.** Züchtungssystem nach einem oder mehreren der vorangehenden Ansprüche, in dem die Mittel für die automatisierte Identifizierung jedes einzelnen Tieres die an das Tier angeschlossene Marke oder Kennzeichnung einschließen, inzwischen die in der Marke oder Kennzeichnung enthaltend und/oder ankommende Information in einer Speichereinheit automatisch eingetragen wird.

**16.** Züchtungssystem nach Anspruch 15, wobei die Mittel für die automatisierte Identifikation jedes einzelnen Tieres die an das Tier angeschlossene Marke oder Kennzeichnung einschließen, indem es in der Marke oder Kennzeichnung Information enthalten und/oder empfangen wird, die weiter zu der Speichereinheit gesendet wird.

**17.** Züchtungssystem nach einem oder mehreren der vorangehenden Ansprüche, wobei die Mittel für die automatisierte Identifikation jedes einzelnen Tieres eine an dem Tier (z.B. an dem Ohr) befestigte Kennzeichnung oder Marke einschließen.

**18.** Züchtungssystem nach einem oder mehreren der Ansprüche 15-17, in dem die Speichereinheit durch die Anwesenheit eines die Marke tragenden Tieres aktiviert wird, indem das Tier als sich drinnen der Fütterungsmittel befindlich oder diese zu betreten identifiziert (wie es in der Erklärung 14 beschrieben) wird.

**19.** Züchtungssystem nach einem oder mehreren der vorangehenden Ansprüche, wobei die Mittel für die kontrollierte Züchtung des Tieres elektronisch an die Mittel, die automatisch jedes individuelle Tier identifizieren, angeschlossen sind.

**20.** Züchtungssystem nach Anspruch 19, wobei die Mittel für die kontrollierte Tierfütterung das identifizierte Tier mit der bestimmten auf Identifikation des Tieres basierende Menge und/oder Mischung des Futters automatisch versorgt.

**21.** Züchtungssystem nach Anspruch 20 mit den Mitteln für die Gewichtsermittlung des identifizierten Tieres, wobei die bestimmte Menge und/oder Mischung des Futters in Bezug auf das Gewicht des identifizierten Tieres ermittelt wird.

**22.** Züchtungssystem nach einem oder mehreren der vorangehenden Ansprüche, wobei die Mittel der kontrollierten Tierfütterung automatisch feststellen, ob das einzelne Tier mit der bestimmten Menge des Futters innerhalb von einem vorherbestimmten Zeitraum versorgt wird.

**23.** Züchtungssystem nach einem oder mehreren der Ansprüche 4-22, wobei es unter den Mitteln für die automatisierte Trennung und/oder Isolierung des identifizierten Tieres von einem oder mehreren Tieren eine Abtrennungseinheit verstanden ist, die mit einer Eingangstür für das die Einheit betretende Tier und den Mitteln für die Weiterleitung des Tieres in Richtung auf zumindest zwei Ausgangstüre ausgestattet ist.

**24.** Züchtungssystem nach Anspruch 23, wobei die Mittel für die Weiterleitung des Tieres in Richtung auf eine von den Ausgangstüren mit einem schwenkbaren Zaun ausgerüstet sind.

25. Züchtungssystem nach Anspruch 23 oder 24, wobei die Mittel für die Weiterleitung des Tieres in Richtung auf eine von den Ausgangstüren automatisch gesteuert sind.

26. Züchtungssystem nach einem oder mehreren der Ansprüche 23-25, wobei die Mittel für die Weiterleitung des Tieres in Richtung auf eine von den Ausgangstüren, basierend auf eine oder mehrere Informationsangaben in Bezug auf Gewicht, Körpertemperatur, Stärke des Fettbelages auf dem Rücken des Tieres, Futterverbrauch und Identifikation des einzelnen Tieres automatisch gesteuert werden.

27. Züchtungssystem nach einem oder mehreren der Ansprüche 4-26, wobei die Mittel für die automatisierte Trennung und/oder Isolierung des identifizierten Tieres von einem oder mehreren Tieren sich drinnen der beweglichen Hütte befinden, in dem die Abtrennung mit den Fütterungsmitteln eingebaut ist.

28. Züchtungssystem nach einem oder mehreren der vorangehenden Ansprüche, das weiterhin mit einem oder mehreren ausgewählten Mitteln für Gewichtsmessung des identifizierten Tieres, mit Mitteln für die Kontrolle des Gehaltes/Grades der subkutanen Fette aus den bestimmten Bereichen des identifizierten Tieres und mit Mitteln für die Kontrolle der Körpertemperatur des identifizierten Tieres ausgerüstet ist.

29. Züchtungssystem nach einem oder mehreren der vorangehenden Ansprüche, das weiterhin Mittel für die Ermittlung jeglicher medizinischen oder sonstigen Behandlung in Bezug auf jegliche Dosierung, Zeit und jeglichen Behandlungstyp einbezieht.

30. Züchtungssystem nach einem oder mehreren der Ansprüche 7-29, wobei die verschiebbare Hütte im wesentlichen mit den abgedichteten Wänden im Schutzraum ausgestattet ist, oder ein abgedichtetes Grundstück von zumindest 0.6 W/m$^2$ einschließt.

31. Züchtungssystem nach einem oder mehreren der Ansprüche 6-30, wobei die Hütte weiterhin mit Belüftungsmitteln ausgestattet ist.

32. Züchtungssystem nach einem oder mehreren der Ansprüche 1-9, wobei unter den Tieren Schafe verstanden sind.

33. Züchtungssystem nach einem oder mehreren der vorangehenden Ansprüche, wobei der Freilandsbereich zumindest eine Vorrichtung für die Wassererfassung - den sogenannten "Pfuhl" einschließt.

34. Züchtungssystem nach Anspruch 33, wobei der Pfuhl auf dem Freilandsbereich dermaßen eingeordnet ist, dass die den Schutzraum verlassenden Tiere den Pfuhl betreten werden, in dem sie unterwegs zu den Mitteln der kontrollierten Tierfütterung sind.

35. Züchtungssystem nach Anspruch 34, wobei der Pfuhl dermaßen dimensioniert wird, um zumindest ein von den oben genannten Tieren einschließen zu können und auf solcher Weise konstruiert, so dass die oben genannten Tiere imstande sind, den Pfuhl zu betreten, indem unterer Teil des Pfuhls stetig vom Grundboden isoliert wird, um dermaßen das Auslaufen von den in dem Pfuhl vorhandenen Substanzen in die Umgebung zu verhindern.

36. Züchtungssystem nach einem oder mehreren der vorangehenden Ansprüche, das einen Pfuhl samt den Dränagemitteln für die Ausgussteile des in dem Pfuhl vorhandenen Inhaltes einbezieht, indem das System weiterhin die Anschlussmittel - solche wie Leitungsrohr oder Schlauch, die an die Dränagemittel für die Ableitung des Ausgussteiles vom Pfuhl aus angeschlossen sind, einbezieht.

37. Züchtungssystem nach Anspruch 36, das einen an das Abwasserklärsystem (wie z.B. die natürlich bepflanzten Bodenfilter) angeschlossene Pfuhl beinhaltet, wobei das Abwasserklärsystem an den Pfuhl durch die für die Aufnahme des entsorgten Teiles aus dem Pfuhl vorgesehenen Dränagemittel angeschlossen ist.

38. Züchtungssystem nach einem oder mehreren der vorangehenden Ansprüche, das den Pfuhl mit den Mitteln für die Flüssigkeitszuleitung an den Pfuhl einschließt.

39. Züchtungssystem nach einem oder mehreren der vorangehenden Ansprüche, das den verschiebbaren Pfuhl einschließt.

**EP 1 059 840 B1**

40. Züchtungssystem nach Anspruch 39, wobei der verschiebbare Pfuhl auf dem Feldbereich plaziert wird, ohne das sich auf dem Feld befindliche Material oder die Ausgrabungen zu entfernen, und dermaßen eingerichtet, dass der Feldbereich substantiell vor Belastung vom Pfuhl oder vor den Pfuhl betretenden Tieren geschützt wird.

41. Züchtungssystem nach einem oder mehreren der vorangehenden Ansprüche, das weiterhin die Mittel für die Identifizierung und Auswahl des für die Schlachtung vorgesehenen Tieres einschließt.

42. Züchtungssystem nach einem oder mehreren der vorangehenden Ansprüche, das für die Züchtung von den 25 bis 100.000 Tieren adaptiert ist.

43. Züchtungssystem nach einem oder mehreren der Ansprüche 2-42, wobei der im System vorhandene umzäunte Feldbereich zumindest 10 Quadratmeter je Tier beträgt.

44. Anlage für den Betrieb im Rahmen des Züchtungssystems nach einem oder mehreren der vorangehenden Ansprüche 1-43 für die individuelle Fütterung einer Tierherde, wobei es mehrere Absperrungen mit dem für die Plazierung eines Tieres angepassten Raum eingerichtet sind und jede Absperrung mit einem Eingang und einem Ausgang und Mitteln für die selektive Eingangs- und Ausgangsumschaltung zwischen dem den Tieren gangbaren und nicht gangbaren Zustand ausgestattet ist, wobei es in jeder Absperrung auch eine Futterschüssel für die Erfassung des Futters,
Behältereinheiten für die Erfassung des angelieferten Futters,
Mittel für die Weiterleitung des Futters von den Behältereinheiten an jede von den vorher genannten Schüssel,
allgemeiner Eingang, dadurch die Tiere jede von den Absperrungen und jedes von den Mitteln, die gegebenenfalls den Tieren durch den allgemeinen Eingang durchziehen zulassen, betreten können,
Mittel, die für die Weiterleitung der Tiere vom allgemeinen Eingang hinaus an die unter den mehreren bestimmte Absperrung vorgesehen sind, und
Überwachungsmittel für die Betriebsüberwachung der Anlage
eingebaut sind.

45. Anlage nach Anspruch 44, die weiterhin mit den Mitteln für die Durchführung von einzigartiger Identifizierung jedes Tieres der Herde versorgt ist, wobei die Mittel dermaßen angeordnet sind, so dass Tier identifiziert werden kann, bevor es die Anlage betritt.

46. Anlage nach Anspruch 45, wobei die Identifikationsmittel aus mehreren Antwortgeräten, jedes mit eigener Kennzahl, bestehen; jedes Tier der Herde mit einem Antwortgerät für die Individuelle Identifikation und mit einem Funkgerät für die Identifizierung den aus dem Antwortgeräten gesendeten Kennzahlen ausgestattet wird, indem das Funkgerät in der Nähe des allgemeinen Eingangs eingerichtet wird, um die Identifikation des Tieres, bevor es die Anlage betritt, durchführen zu können.

47. Anlage nach Anspruch 45 oder 46, wobei es weiterhin eine Eingangsabsperrung mit dem für die Platzierung eines Tieres angemessenen Raum eingerichtet wird, der allgemeine Eingang den Eingang von der Eingangsabsperrung darstellt und die Eingangsabsperrung mit den Mitteln ausgestattet ist, die dem sich in der Absperrung befindlichen Tier gegebenenfalls die Eingangsabsperrung zu verlassen gestatten und die die Mittel für die Ermittlung zumindest eines von den folgenden Merkmalen jedes identifizierten die allgemeine Eingangsabsperrung betretendes Tieres und für die Übergabe zumindest eines von den folgenden Merkmalen an die Überwachungsmittel einbezieht:

    a) Gewicht des Tieres,
    b) Hauttemperatur des Tieres, die gemäß der infraroten Strahlung des Tieres gemessen wird;
    c) Körpertemperatur des Tieres, die mittels an das Tier angeschlossenen Sensor gemessen wird, und
    d) Stärke des Fettbelages auf dem Rücken des Tieres.

48. Anlage nach einem oder mehreren der Ansprüche 45-47, die weiterhin mit den Mitteln für selektive Abtrennung des identifizierten Tieres, das den allgemeinen Eingang hindurch in die zumindest eine Abtrennungsabsperrung vorübergegangen ist, ausgestattet ist.

49. Anlage nach einem oder mehreren der Ansprüche 44-48, wobei es mehrere Absperrungen auf einer Plattform eingerichtet sind und die Anlage die Mittel für die Rotation der Plattform einbezieht, um zu ermöglichen, durch das rotierende Bewegen der Plattform zwischen dem gangbaren und nicht gangbaren Zustand umzuschalten.

50. Anlage nach Anspruch 49, wobei die den Eingang darstellende Öffnung von jeder Absperrung gleichfalls den Ausgang der vorher genannten Absperrung darstellt.

51. Anlage nach einem oder mehreren der Ansprüche 45-50, wobei es durch die Steuermittel die Menge und gegebenenfalls der Typ des dem individuell identifizierten Tier zugeführten Futters kontrolliert werden kann.

52. Anlage nach einem oder mehreren der Ansprüche 44-51, die die Mittel für die Ermittlung des dem einzelnen Tier zugeführten Futters gemäß der Temperatur und gegebenenfalls gemäß der Windgeschwindigkeit, denen die Tiere ausgesetzt sind, einbezieht.

53. Anlage nach einem oder mehreren der Ansprüche 44-52, wobei es in der Tierherde eine Vielzahl von den Mastschweinen vorhanden ist.

54. Verfahren für den Einsatz im Züchtungssystem nach einem oder mehreren der Ansprüche 1-43 in Betreff der Fütterung der Mastschweineherde, wobei jedes einzelne Mastschwein durch die Identifikationsmittel einzigartig identifizierbar ist, die folgende Phasen

der Identifikation eines von den Mastschweinen und der Weitergabe der Identifikationsangaben an die Steuereinheit;
der Zulassung des Mastschweins in die für ein Mastschwein vorgesehene Fütterungsabsperrung und
der Zulassung diesem die Fütterungsabsperrung zu verlassen einbezieht,

**dadurch gekennzeichnet, dass** die sich durch weitere Phasen von:

der Ermittlung der individuell ermittelten Menge des Futters zu jedem Mastschwein durch Mittel der Steuereinheit und
der Zuführung der jedem Mastschwein ermittelten Futtermenge, wenn das Mastschwein sich in der Fütterungsabsperrung befindet,

auszeichnet,
wobei jede Phase mit der Steuereinheit kontrolliert wird.

55. Verfahren nach Anspruch 54, wobei jedes Ferkel mit einem Antwortgerät mit einzigartiger Kennzahl ausgestattet ist, indem die Identifikationsphase weiterhin Phase für das Ablesen der Kennzahl des Antwortgerätes eines von den Mastschweinen durch das Funkgerät einbezieht.

56. Verfahren nach Anspruch 54 oder 55, die die Ermittlungsphase zumindest eines von den folgenden Merkmalen von jedem identifizierten Mastschwein und Speicherung dieser vorher ermittelten Merkmale in den Speicherungsmitteln der Steuereinheit

a) des Gewichts des Tieres,
b) der Hauttemperatur des Tieres, die gemäß der infraroten Strahlung des Tieres gemessen wird;
c) der Körpertemperatur des Tieres, die mittels an das Tier angeschlossenen Sensor gemessen wird, und
d) der Stärke des Fettbelages auf dem Rücken des Tieres einbezieht.

57. Verfahren nach Anspruch 56, wobei es zumindest das Gewicht des Mastaschweines ermittelt wird, inzwischen die Menge des dem einzelnen Mastschwein zu zuführenden Futters gemäß dem Gewicht des vorher genannten Mastschweins errechnet wird.

58. Verfahren nach einem oder mehreren der Ansprüche 54-57, wobei die Menge des jedem Mastschwein zugeführten Futters gemäß der Wettertemperatur und gegebenenfalls gemäß der Windgeschwindigkeit, denen die Mastschweine ausgesetzt sind, angepasst wird.

59. Verfahren nach einem oder mehreren der Ansprüche 54-58, die aus den Phasen

der Ermittlung, ob das identifizierte Mastschwein durch die Steuereinheit von der Herde abgetrennt werden muss und
der Aktivierung der Abtrennungsvorrichtungen mittels der Steuereinheit, um das vorher genannte Mastschwein in einer Abtrennungsabsperrung abzusondern,

besteht.

60. Verfahren nach einem oder mehreren der Ansprüche 57-59, wobei es zumindest die Temperatur des identifizierten Mastschweins ermittelt wird, indem die Abtrennung des identifizierten Mastschweins gemäß der bereits ermittelten Temperatur des vorher genannten Mastschweins durchgeführt wird.

61. Verfahren nach einem oder mehreren der Ansprüche 54-60, wobei die Steuereinheit durch das Datenkommunikationsnetz zumindest zeitweilig an ein ferngesteuertes Überwachungssystem angeschlossen wird, um den Betrieb der Steuereinheit fernüberwachen und zumindest teilweise kontrollieren zu können.

62. Verfahren nach einem oder mehreren der Ansprüche 54-61, wobei der Verfahren mit der Fütterungsanlage gemäß den Erklärungen 44-53 betrieben wird.

63. Anlage nach einem oder mehreren der Ansprüche 44-53, wobei die Steuereinheit stetig oder zeitweilig durch das Kommunikationsnetz an das Überwachungssystem angeschlossen wird, von dem die Betriebstüchtigkeit des Systems überwacht und zumindest teilweise kontrolliert werden kann.

64. Anlage nach Anspruch 63, wobei es den unterschiedlichen Personen oder Institutionen der Zugang oder der beschränkte Zugang an das Überwachungssystem gestattet wird.

65. Anlage nach Anspruch 64, wobei die Personen oder Institutionen eines oder mehrere aus dem Folgenden; einen oder mehrere Landwirten, einen oder mehrere Kontrolleure, einen Veterinär, einen oder mehrere Investoren, ein Schlachthaus und einen Futterlieferanten bedeuten.

**Revendications**

1. Système d'élevage pour l'utilisation dans un environnement en plein air pour un certain nombre d'animaux et comprenant

   a) des moyens d'enregistrement automatique et électronique de données sur les animaux individuels, **caractérisé en ce que** le système comprend en outre
   b) des moyens de chargement des données enregistrées de chaque animal dans une unité d'enregistrement,
   c) des moyens d'alimentation contrôlée et individuellement régularisée des animaux basée sur les données enregistrées de chaque animal, et
   d) une zone de champ en plein air dans laquelle les moyens a) et c) sont arrangés.

2. Système d'élevage selon la revendication 1, dans lequel le champ en plein air est enclos par une clôture.

3. Système d'élevage selon la revendication 1 ou 2, comprenant en outre des moyens d'identification automatique de chacun des animaux individuels.

4. Système d'élevage selon l'une quelconque des revendications 1 à 3 comprenant en outre des moyens de séparation automatique et/ou d'isolation d'un animal identifié à partir d'un ou de plusieurs autres animaux.

5. Système d'élevage selon la revendication 4, dans lequel les moyens de séparation et/ou d'isolation sont intégrés dans les moyens d'alimentation.

6. Système d'élevage selon l'une quelconque des revendications précédentes comprenant en outre au moins une hutte pour les animaux.

7. Système d'élevage selon la revendication 6, dans lequel la hutte est mobile.

8. Système d'élevage selon l'une quelconque des revendications 6 ou 7, dans lequel la hutte est essentiellement enclose.

9. Système d'élevage selon l'une quelconque des revendications 6 à 8, dans lequel la hutte pour les animaux est adaptée selon le sexe, l'âge et le nombre d'animaux auxquels la hutte assure un abri.

10. Système d'élevage selon l'une quelconque des revendications précédentes, adapté à l'élevage de cochons.

11. Système d'élevage selon la revendication 10, dans lequel les cochons sont des porcs âgés de 28 jours au moins.

12. Système d'élevage selon l'une quelconque des revendications 6 à 10, dans lequel la hutte pour les animaux est une hutte de la mise bas des cochons, adaptée à la mise bas, la hutte de la mise bas comprenant au moins une cage de mise bas pour une truie et au moins un abris pour un porcelet.

13. Système d'élevage selon l'une quelconque des revendications 6 à 10, dans lequel la hutte pour les animaux est une hutte de famille pour les cochons adaptée à loger au moins une truie avec des porcelets âgés d'environ jusqu'à 3-8 semaines, la hutte étant divisée au moins en deux parties dont l'une permet aux porcelets d'être séparés d'une autre partie dans laquelle est logée ou sont logées les truies, la séparation étant faite par exemple au moyen d'une cloison ayant une ouverture de telles dimensions que les truies, mais pas les porcelets sont empêchées de franchir l'ouverture.

14. Système d'élevage selon l'une quelconque des revendications 4 à 13, dans lequel les moyens d'alimentation de l'animal utilisent un transpondeur-mangeoire et les moyens de séparation et/ou d'isolation des animaux comprennent une porte d'entrée et une porte de sortie et en option une barrière entre les portes d'entrée et de sortie empêchant l'animal de sortir par la porte d'entrée.

15. Système d'élevage selon l'une quelconque des revendications précédentes, dans lequel les moyens d'identification automatique d'un animal individuel comprennent une marque ou un label connecté à l'animal, la marque ou le label comprenant et/ou obtenant de l'information qui est automatiquement enregistrée par l'unité d'enregistrement.

16. Système d'élevage selon la revendication 15, dans lequel les moyens d'identification automatique d'un animal individuel comprennent une marque ou un label connecté à l'animal, la marque ou le label comprenant et/ou obtenant de l'information qui est envoyée à l'unité d'enregistrement.

17. Système d'élevage selon l'une quelconque des revendications précédentes, dans lequel les moyens d'identification automatique d'un animal Individuel comprennent un label ou une marque fixée à l'animal, par exemple à son oreille.

18. Système d'élevage selon l'une quelconque des revendications 15 à 17, dans lequel l'unité d'enregistrement est activée par la présence de l'animal portant la marque lorsque l'animal se trouve à l'intérieur ou est en train de passer dans les moyens d'alimentation comme celui décrit dans la revendication 14.

19. Système d'élevage selon l'une quelconque des revendications précédentes, dans lequel les moyens d'alimentation contrôlée de l'animal sont connectés de manière électronique aux moyens d'identification automatique de l'animal individuel.

20. Système d'élevage selon la revendication 19, dans lequel les moyens d'alimentation contrôlée de l'animal fournit automatiquement à l'animal identifié une quantité specifique et/ou un mélange spécifique de nourriture basée sur l'identification de l'animal.

21. Système d'élevage selon la revendication 20 et comprenant des moyens de détermination du poids des animaux identifiés, dans lequel la quantité spécifique et/ou le mélange de nourriture est déterminé selon le poids de l'animal identifié.

22. Système d'élevage selon l'une quelconque des revendications précédentes, dans lequel les moyens d'alimentation contrôlée de l'animal reconnaissent automatiquement si l'animal individuel est approvisionné d'une quantité spécifique de nourriture en une période de temps prédéterminée.

23. Système d'élevage selon l'une quelconque des revendications 4 à 22, dans lequel les moyens de séparation et/ou d'isolation automatique d'un animal identifié d'un ou de plusieurs autres animaux est une unité de séparation comprenant une porte d'entrée pour un animal qui entre dans l'unité et des moyens pour conduire l'animal vers l'une d'au moins deux portes de sortie.

24. Système d'élevage selon la revendication 23, dans lequel les moyens pour conduire l'animal vers l'une des portes de sortie comprennent une clôture tournante.

25. Système d'élevage selon la revendication 23 ou 24, dans lequel les moyens pour conduire l'animal vers l'une des portes de sortie sont actionnés automatiquement.

26. Système d'élevage selon l'une quelconque des revendications 23 à 25, dans lequel les moyens pour conduire l'animal vers l'une des portes de sortie sont actionnés automatiquement et sont basés sur une ou plusieurs informations concernant le poids, la température corporelle, l'épaisseur de la couche de graisse sur le dos de l'animal, la consommation de nourriture et l'identification de l'animal individuel.

27. Système d'élevage selon l'une quelconque des revendications 4 à 26, dans lequel les moyens de séparation et/ou d'isolation automatique d'un animal identifié d'un ou de plusieurs autres animaux, la séparation étant intégrée dans les moyens d'alimentation, sont placés dans la hutte mobile.

28. Système d'élevage selon l'une quelconque des revendications précédentes comprenant en outre un ou plusieurs moyens choisis parmi des moyens de mesure du poids d'un animal identifié, des moyens de contrôle du contenu/ degré de graisse sous-cutanée dans des zones sélectionnées d'un animal identifié et des moyens de contrôle de la température corporelle d'un animal identifié.

29. Système d'élevage selon l'une quelconque des revendications précédentes comprenant en outre des moyens d'enregistrement de tout traitement possible, médical ou autre, par rapport à tout dosage, temps et type de traitement.

30. Système d'élevage selon l'une quelconque des revendications 7 à 29, dans lequel la hutte mobile est essentiellement pourvue de murs d'abri isolés ou possède une propriété isolante de moins de 0,6 W/m$^2$.

31. Système d'élevage selon l'une quelconque des revendications 6 à 30, dans lequel la hutte comprend en outre des moyens de ventilation.

32. Système d'élevage selon l'une quelconque des revendications 1 à 9, dans lequel les animaux sont des moutons.

33. Système d'élevage selon l'une quelconque des revendications précédentes, dans lequel la zone de champ en plein air comprend au moins un dispositif pour contenir l'eau appelé « trou de décrassage ».

34. Système d'élevage selon la revendication 33, dans lequel le trou de décrassage est arrangé dans le champ de manière à ce que les animaux quittant l'abri passent dans le trou de décrassage sur leur chemin dans les moyens d'alimentation contrôlée des animaux,

35. Système d'élevage selon la revendication 34, dans lequel le trou de décrassage a des dimensions qui permettent de contenir au moins un des animaux et un tel design que les animaux puissent entrer et sortir du trou de décrassage, le trou de décrassage étant essentiellement isolé du champ dans sa partie inférieure à l'aide d'une barrière de manière à empêcher essentiellement des substances contenues dans le trou de décrassage de se répandre dans l'environnement.

36. Système d'élevage selon l'une quelconque des revendications précédentes comprenant un trou de décrassage avec des moyens d'écoulement pour décharger des parties du contenu du trou de décrassage, le système comprenant en outre des moyens de connexion telles qu'une conduite ou un tuyau connecté aux moyens d'écoulement pour conduire la partie déchargée du trou de décrassage.

37. Système d'élevage selon la revendication 36 comprenant un trou de décrassage connecté au système de traitement des eaux résiduaires tel qu'un lit naturel de roseaux, dans lequel le système de traitement des eaux résiduaires est connecté au trou de décrassage par les moyens d'écoulement pour recevoir la partie déchargée du trou de décrassage.

38. Système d'élevage selon l'une quelconque des revendications précédentes comprenant un trou de décrassage avec des moyens d'addition de liquide dans le trou de décrassage.

**39.** Système d'élevage selon l'une quelconque des revendications précédentes comprenant un trou de décrassage qui est mobile.

**40.** Système d'élevage selon la revendication 39, dans lequel le trou de décrassage est placé dans le champ sans retirer le matériel du champ ou sans creuser des trous et de manière que la surface du champ soit essentiellement protégée contre des dégâts du trou de décrassage ou des animaux entrant dans le trou de décrassage.

**41.** Système d'élevage selon l'une quelconque des revendications précédentes comprenant en outre des moyens de détection et de sélection d'un animal prêt à l'abattage.

**42.** Système d'élevage selon l'une quelconque des revendications précédentes, adapté à contenir entre 25 et 100.000 animaux pour l'élevage.

**43.** Système d'élevage selon l'une quelconque des revendications 2 à 42, dans lequel la zone de champ entourée d'une clôture n'occupe pas moins de 10 mètres carrés par animal dans le système.

**44.** Arrangement pour l'utilisation dans un système d'élevage selon l'une quelconque des revendications 1 à 43 pour l'alimentation individuelle d'animaux d'un troupeau comprenant plusieurs enclos de taille appropriée à comprendre un des animaux, chacun des enclos ayant une entrée et une sortie ainsi que des moyens de commutation sélective de l'entrée et de la sortie entre un état passable et un état non-passable pour les animaux, chaque enclos ayant également un récipient de nourriture pour contenir de la nourriture,
des moyens conteneur pour des réserves de nourriture,
des moyens pour conduire la nourriture à partir des moyens conteneur dans chacun des récipients,
une entrée commune par laquelle les animaux peuvent entrer dans chacun des enclos ainsi que des moyens pour permettre de manière sélective aux animaux de passer l'entrée commune,
des moyens pour conduire les animaux à partir de l'entrée commune dans un enclos spécifique choisi parmi la pluralité d'enclos, et
des moyens de contrôle pour contrôler le fonctionnement de l'arrangement.

**45.** Arrangement selon la revendication 44 et comprenant en outre les moyens d'exécution d'une identification unique de chaque animal du troupeau, les moyens étant arrangés afin de permettre l'identification d'un animal avant de le laisser entrer dans l'arrangement.

**46.** Arrangement selon la revendication 45, dans lequel les moyens d'identification comprennent une pluralité de transpondeurs chacun ayant un code unique d'identification, chaque animal du troupeau étant équipé d'un transpondeur d'identification individuelle et d'un émetteur-récepteur pour lire les codes d'identification des transpondeurs, l'émetteur-récepteur étant arrangé près de l'entrée commune pour permettre l'identification d'un animal avant de le laisser entrer dans l'arrangement.

**47.** Arrangement selon la revendication 45 ou 46 et comprenant en outre un enclos d'entrée de taille appropriée à contenir un des animaux, l'entrée commune formant l'entrée de l'enclos d'entrée, l'enclos d'entrée ayant des moyens pour permettre de manière sélective à un animal qui se trouve dans l'enclos de sortir de l'enclos d'entrée et ayant des moyens de détermination d'au moins une des caractéristiques suivantes de chaque animal identifié passant par l'entrée commune et de transmission d'au moins une caractéristique aux moyens de contrôle

a) le poids de l'animal,
b) la température de la peau de l'animal, mesurée à partir du rayonnement infrarouge de l'animal,
c) la température corporelle de l'animal, mesurée au moyen d'un détecteur monté sur l'animal, et
d) l'épaisseur de la couche de graisse sur le dos de l'animal.

**48.** Arrangement selon l'une quelconque des revendications 45 à 47 et comprenant en outre des moyens de séparation sélective des animaux identifiés étant passés par l'entrée commune dans au moins un enclos de séparation.

**49.** Arrangement selon l'une quelconque des revendications 44 à 48,, dans lequel la pluralité d'enclos sont arrangés sur une plate-forme, l'arrangement ayant des moyens de rotation de la plate-forme, alternant entre l'état passable et l'état non-passable étant assuré par le mouvement rotatif de la plate-forme.

**50.** Arrangement selon la revendication 49, dans lequel l'ouverture définissant l'entrée de chaque enclos définit également la sortie de l'enclos.

51. Arrangement selon l'une quelconque des revendications 45 à 50, dans lequel les moyens de contrôle peuvent contrôler la quantité et en option le type de nourriture fournie à l'animal individuel identifié.

52. Arrangement selon l'une quelconque des revendications 44 à 51 et comprenant des moyens d'ajustement de la quantité de nourriture fournie à l'animal individuel selon la température et en option selon la vitesse du vent auquel les animaux sont exposés.

53. Arrangement selon l'une quelconque des revendications 44 à 52, dans lequel le troupeau d'animaux comprend une majorité de porcs.

54. Procédé d'utilisation dans un système d'élevage selon l'une quelconque des revendications 1 à 43 pour l'alimentation de porcs d'un troupeau, chacun des porcs étant identifiable de façon unique à l'aide de moyens d'identification comprenant les étapes :

d'identifier un des porcs et de transmettre cette identification à une unité de contrôle,
de laisser le porc entrer dans un enclos d'alimentation dans lequel ne se trouve qu'un seul porc, et
de laisser le porc sortir de l'enclos d'alimentation,

**caractérisée en ce que** le procédé comprend en outre les étapes :

de déterminer une quantité individuelle de nourriture pour chaque porc au moyen de l'unité de contrôle, et
de nourrir chaque porc de la quantité individuelle déterminée de nourriture lorsque le porc se trouve dans l'enclos d'alimentation,

dans lequel chaque étape est contrôlé au moyen de l'unité de contrôle.

55. Procédé selon la revendication 54, dans lequel chaque porc est équipé d'un transpondeur ayant un code unique d'identification et l'étape d'identification comprend l'étape de lecture du code d'identification du transpondeur d'un des porcs à l'aide d'un émetteur-récepteur.

56. Procédé selon la revendication 54 ou 55 et comprenant l'étape de détermination d'au moins une des caractéristiques suivantes de chaque porc identifié et de mémorisation des caractéristiques déterminées dans des moyens de mémoire de l'unité de contrôle :

a) le poids du porc,
b) la température de la peau du porc mesurée à l'aide du rayonnement infrarouge de l'animal,
c) la température corporelle du porc, mesurée au moyen d'un détecteur monté sur le porc, et
d) l'épaisseur de la couche de graisse sur le dos du porc.

57. Procédé selon la revendication 56, dans lequel au moins le poids du porc est déterminé et la quantité de la nourriture fournie au porc individuel est déterminée à partir du poids du porc.

58. Procédé selon l'une quelconque des revendications 54 à 57, dans lequel la quantité de la nourriture fournie à chaque animal est ajustée par rapport à la température de l'air et en option à la vitesse du vent auquel les porcs sont exposés.

59. Procédé selon l'une quelconque des revendications 54 à 58 et comprenant les étapes de

déterminer si un porc identifié devait être séparé du troupeau au moyen de l'unité de contrôle, et
d'activer des moyens de séparation au moyen de l'unité de contrôle afin de séparer le porc dans un enclos de séparation.

60. Procédé selon l'une quelconque des revendications 57 à 59, dans lequel au moins la température du porc identifié est déterminée et la séparation du porc identifié peut être effectuée en réponse à la température déterminée du porc.

**61.** Procédé selon l'une quelconque des revendications 54 à 60, dans lequel l'unité de contrôle est au moins temporairement connectée par un réseau de communication de données à un système de surveillance à distance grâce auquel l'opération de l'unité de contrôle peut être surveillée à distance et contrôlé au moins en partie.

**62.** Procédé selon l'une quelconque des revendications 54 à 61, dans lequel le procédé est employé avec un arrangement d'alimentation selon l'une quelconque des revendications 44 à 53.

**63.** Arrangement selon l'une quelconque des revendications 44 à 53, dans lequel l'unité de contrôle est en permanence ou temporairement connectée par un réseau de communication à un système de surveillance à partir duquel le fonctionnement du système peut être surveillé et au moins partiellement contrôlé.

**64.** Arrangement selon la revendication 63, dans lequel différents personnes ou institutions ont accès ou accès partiel au réseau de communication.

**65.** Arrangement selon la revendication 64, dans lequel les personnes ou les institutions comprennent une ou plusieurs personnes ou institutions choisies parmi les suivants: un ou plusieurs éleveur(s), un ou plusieurs contrôleur(s), un vétérinaire, un ou plusieurs actionnaire(s), un abattoir et un fournisseur de nourriture.

# Fig. 1

# Fig. 2

**Fig. 3**

# Fig. 4

**Fig. 5**

**Fig. 6**

27

**Fig. 7**

**Fig. 8**

# Fig. 9

**Fig. 10**

**Fig. 11**

Fig. 12

EP 1 059 840 B1

**Fig. 13**

Fig. 14

**Fig.15**

Fig. 16

Fig. 17

Fig. 18

```
┌─────────────┐              ┌──────────────┐
│  Farrowing  │─────────────▶│   Number     │
│    date     │              │   L=Live     │
└─────────────┘              │   D=Death    │
       │                     │   S=Weak     │
    ┌──no──┐                 └──────────────┘
    │      ▼
    │   ◇─────────◇
    │  ╱ T= Farrow ╲
    └─╲  + 3 weeks ╱
       ◇─────────◇
            │
           yes
            ▼
       ◇─────────◇                ┌──────────────┐         ┌──────────────┐
      ╱  Sow in   ╲──────yes─────▶│  Fertilize   │────────▶│    Boar      │
      ╲   heat    ╱               │    date      │         │  number=     │
       ◇─────────◇                └──────────────┘         └──────────────┘
            │
           no
            ▼
   ┌─────────────┐          ┌──────────────┐                      ◇─────────◇
   │  Removal of │          │  Number=     │        ┌────no───────╱ weight > ╲
   │   piglets   │─────────▶│    kg.=      │────────┼────────────▶╲  25 kg   ╱
   │    date     │          │  Field=      │        │              ◇─────────◇
   └─────────────┘          └──────────────┘                            │
            │                                                          yes
            ▼                                                           ▼
   ┌─────────────┐          ┌──────────────┐                  ┌──────────────┐
   │  Fertilize  │─────────▶│    Boar      │                  │  Young pigs  │
   │    date     │          │  number=     │                  │  transfer to │
   └─────────────┘          └──────────────┘                  │  free range  │
                                                              └──────────────┘
                                                                      │
                                                                      ▼
                                                              ┌──────────────┐
                                                              │  Number=     │
                                                              │    Kg=       │
                                                              │   Field=     │
                                                              └──────────────┘
```

# Fig. 19

Fig. 20

**Fig.** 21

EP 1 059 840 B1

**Fig.** 22

EP 1 059 840 B1

**Fig. 23**

EP 1 059 840 B1

Production equipment————(Fig. 28)

A unique method for
production of free ——
range porkers

Management————————(Fig. 29)

Environment relations————(Fig. 30)

Slaughtering————————(Fig. 30)

# Fig. 24

Production equipment

**Huts for pigs**
well-insulated
all huts are built
as the standard hut

- Water hut — Water tank and a row of drinking valves
- Family hut — The huts are split, one third of the space are for piglets the rest is for 3 to 4 sows
- Farrow hut — A hut with 2 farrow guards drinking valves and a heating lamp for the piglets
- Standard hut — Basic model, insulated with 100 mm mineral wool in walls and roof windows which can be opened and the ridge of the roof can be raised

**Feeding machines**

- Feeding hut for sows — Equipped for feeding one sow at a time transponder and computer
- Feeding machines roundabout — Up to 7 porkers can eat at a time, the feeding amount for a single animal can be regulated for a row of parameters: Feeding key, weight, temperature, windvelocity and growth Time of the day, feeding amount, Tag ID, and fat thickness
- Feeding program — React on the feeding key, outdoor temperature, windvelocity and weight reports
- Machine controls — PLC or industrial computer, wireless connection with central control unit

**Management / functionally**

- Database — Sows / Porkers
- MMI systems — The single feeding unit (Man machine interfaces) / All feeding units
- Communication — wireless connection between feeding units and the control centre
- Staff — Supervisor of the units / Farmer / Control centre
- Information flow — Control centre / Producer / Slaughterhouse / Bank / Free range pigs consultant

# Fig. 25

Management ─

Field
  Field plans ─┤
    Division of fields and rotation of crops
    Plan for distribution of Porker units

  Soil types ─
    Clay soil
    Sandy soil
    Mould
    Old forrest
    uncultivated moor

Feed
  Salmonella free ── Heat treatment against samonella and other feedcarried diseases
  Ecologically ── Can be grown ecologically

The pigs
  Sows ── To be inseminated between 3 and 8 weeks after farrowing
  Piglets ─┤
    To be taken from the sow 6 - 8 weeks after farrowing without any use of medicine
    Equiped with identity tags when taken from the sow
  Porkers ── Are not to be medicated at all, it is human food!
    Fat thickness and meat quality

Medication
  All medication is registered ─┤
    Database together with other kind of information and interest concerning the animals
    Only sows must be medicated or treated with antibiotic

# Fig. 26

| | | | |
|---|---|---|---|
| Environment relations | Pig toilet for between 50 - 70 % of the slurry can be accumulated. There is a water valve in the pig toilet. | Root zone wastewater treatment plant | Slurry is treated in a rood zone wastewater treatment plant |
| | | Dry matter separation | A truck with Bioscan equipment comes with regular intervals, dry matter is to be sold as manure |
| | | Slurry tank | Normal solution is to be spread on green fields |
| | | Biogas unit | The slurry is to be transported to a central biogas unit |
| | Crops rotation | | According to local environmental requirements |
| Slaughtering | Mobile slaughterhouse | Truck with chilling container | Refrigerated container for storeing 1/2 pigs body |
| | | | Container with slaughter unit and tank for slaughter waste and water |
| | | | Lift for transport of pigs from ground to container floor |
| | | Staff truck | Staff truck with shower and toilet etc. |
| | | | Energy plant for slaughter unit, hot water, electricity etc |
| | Stationary slaughterhouse | Transportation of pigs | Transport time not exceeding 30 minutes |

# Fig. 27